# EUROPEAN PATENT APPLICATION

(11) **EP 1 743 796 A2**
(43) Date of publication of application: **17.01.2007**
(21) Application number: 06115864.8
(22) Date of filing: 22.06.2006
(51) Int. Cl.: B60K 7/00, F16H 47/04, F16H 1/32

(54) **Wheel motor device**

(30) Priority: 13.07.2005 JP 2005204286; 13.07.2005 JP 2005204287; 30.09.2005 JP 2005287247
(71) Applicant: KANZAKI KOKYUKOKI MFG. CO., LTD., Amagasaki-shi, Hyogo 661-0981 (JP)
(72) Inventor: Sasahara, Kengo Kanzaki Kokyukoki Mfg. Co., Ltd., Hyogo 661-0981 (JP); Kiyooka, Koji Kanzaki Kokyukoki Mfg. Co., Ltd., Hyogo 661-0981 (JP); Mochizuki, Yasuhisa Kanzaki Kokyukoki Mfg. Co., Lt, Hyogo 661-0981 (JP); Nozaki, Takeaki Kanzaki Kokyukoki Mfg. Co., Ltd., Hyogo 661-0981 (JP)
(74) Representative: Peckmann, Ralf

(57) **Abstract**

There is provided a wheel motor device including a variable-rotation output unit for outputting rotational power of a variable-rotation output body accommodated in a variable-rotation output body housing via a variable-rotation output shaft rotating about a reference axis line; and a reduction unit including a reduction gear mechanism for reducing rotation speed of the variable-rotation output shaft and a gear housing for accommodating the reduction gear mechanism. The reduction gear mechanism includes an input shaft relatively non-rotatable about the reference axis line with respect to the variable-rotation output shaft; an eccentric member having a rotating center eccentric from the reference axis line, the eccentric member being relatively non-rotatable with respect to the input shaft; an outer teeth member supported at the eccentric member in a relatively rotatable manner, the outer teeth member having outer teeth arranged on the outer peripheral surface; an inner teeth member having an inner diameter greater than an outer diameter of the outer teeth member and fixed in a non-rotatable manner, the inner teeth member having an inner teeth engaging with the outer teeth, the inner teeth having a teeth number different from that of the outer teeth; a rotation-component retrieving mechanism for retrieving rotation-component around the reference axis line from the outer teeth member; and a reduced-rotation output member rotatably driven about the reference axis line by the rotation-component retrieving mechanism.

## Description

### BACKGROUND OF THE INVENTION

### Field of the Invention

The present invention relates to a wheel motor device provided for each driving wheel, the wheel motor device reducing speed of the variable-rotation output from a variable-rotation output unit and transmitting the result to the wheel of the driving wheel.

The present invention also relates a wheel motor device provided for each driving wheel, the wheel motor device reducing speed of the rotational output from a hydraulic motor unit and transmitting the result to the driving wheel.

### Related Art

A wheel motor device provided in a vehicle so as to independently drive a driving wheel is conventionally known.

Since the wheel motor device can be arranged close to the corresponding driving wheel while being spaced apart from an actuator such as a hydraulic pump unit and the like that operates in cooperation therewith, a free space is secured between a pair of driving wheels and the degree of freedom of design of the vehicle is enhanced compared to a transaxle device including a differential gear device for differentially connecting the pair of driving axle.

In the conventional wheel motor devices, there has been proposed the wheel motor device including a reduction unit that having a reduction gear train and arranged between a hydraulic motor unit acting as a variable-rotation output unit and a driving wheel (see, e.g., US Patent No. 6,811,510).

Since the wheel motor device including the reduction gear train can use a low torque/high rotation hydraulic motor main body as a hydraulic motor main body of the hydraulic motor unit, the hydraulic motor main body can be miniaturized and the operation fluid leakage amount from the hydraulic motor main body can be reduced.

However, since the number of components increases as a planetary gear mechanism is used for the reduction gear train in the conventional wheel motor device with reduction gear train, the cost increases and the configuration becomes more complicating.

A wheel motor device using a parallel (external) gear mechanism as the reduction gear train has been also proposed, but such wheel motor device tends to enlarge in the radial direction.

The present invention, in view of the above, aims to provide a wheel motor device including a reduction gear mechanism for reducing speed of the variable-rotation power from the variable-rotation output unit and transmitting the result to the driving wheel, where reduction in the number of components and miniaturization of the reduction gear mechanism are achieved, and the configuration of the entire device is simplified and miniaturized so as to sufficiently adapt to a small vehicle with small diameter tires.

The conventional wheel motor device further has the following problem.

The conventional wheel motor device includes a motor housing, a hydraulic motor main body accommodated within the motor housing, a motor shaft rotated and driven by the hydraulic motor main body, a reduction gear train for reducing speed of the rotational output from the motor shaft, a gear housing connected to the motor housing so as to accommodate the reduction gear train, and an output shaft for outputting the rotational output whose speed is reduced by the reduction gear train.

The wheel motor device with reduction gear train can use a low torque/high rotation hydraulic motor main body, thereby miniaturizing the hydraulic motor main body as well as reducing the operation fluid leakage amount from the hydraulic motor main body. However, the conventional wheel motor device with reduction gear train is not sufficiently considered in terms of efficient arrangement of a conduit connected to the wheel motor device.

That is, the motor housing is provided with operation fluid ports that function as fluid connecting ports for the hydraulic pump main body operating in cooperation with the wheel motor device.

The gear housing is provided with at least one feeding/discharging port for feeding and discharging the lubricating fluid for the gear train.

As described above, although the conventional wheel motor device includes fluid ports respectively formed in the motor housing and the gear housing in the wheel motor device, suitable directions to which the fluid ports are directed with the vehicle frame as a reference differs depending on the specification, layout and the like of the vehicle.

Further, the wheel motor device is normally arranged at each of a pair of left and right driving wheels. The pair of wheel motor devices applied to the pair of left and right driving wheels desirably has the same configuration in terms of manufacturing cost, inventory management and the like.

However, if the wheel motor devices of the same configuration are each applied to a pair of left and right driving wheels, the arrangement of the operation fluid ports in one wheel motor device applied to one driving wheel and the arrangement of the operation fluid ports in the other wheel motor device applied to the other driving wheel differ from each other.

Piping errors and the like easily occurs in such a case where the arrangements of the operation fluid ports of one wheel motor device for one driving wheel and the other wheel motor device for the other driving wheel differ from each other.

The present invention, in view of the prior art, further aims to provide a wheel motor device including a hydraulic motor unit with a motor housing formed with operation fluid ports, and a reduction unit including a gear housing formed with a fluid port for feeding and discharging the stored fluid, where the operation fluid ports and the fluid port are each directed towards a suitable direction.

### SUMMARY OF THE INVENTION

According to a first aspect of the present invention, there is provided a wheel motor device including a variable-rotation output unit for outputting rotational power of a variable-rotation output body accommodated in a variable-rotation output body housing via a variable-rotation output shaft rotating about a reference axis line; and a reduction unit including a reduction gear mechanism for reducing rotation speed of the variable-rotation output shaft and a gear housing for accommodating the reduction gear mechanism.

The reduction gear mechanism includes an input shaft relatively non-rotatable about the reference axis line with respect to the variable-rotation output shaft; an eccentric member having a rotating center eccentric from the reference axis line, the eccentric member being relatively non-rotatable with respect to the input shaft; an outer teeth member supported at the eccentric member in a relatively rotatable manner, the outer teeth member having outer teeth arranged on the outer peripheral surface; an inner teeth member having an inner diameter greater than an outer diameter of the outer teeth member and fixed in a non-rotatable manner, the inner teeth member having an inner teeth engaging with the outer teeth, the inner teeth having a teeth number different from that of the outer teeth; a rotation-component retrieving mechanism for retrieving rotation-component around the reference axis line from the outer teeth member; and a reduced-rotation output member rotatably driven about the reference axis line by the rotation-component retrieving mechanism.

According to the configuration, the cost is reduced due to reduction in the number of components and enhancement in assembling efficiency compared to the conventional wheel motor device in which the reduction gear mechanism is configured by a planetary gear mechanism.

Further, miniaturization in the radial direction is achieved and the cost is reduced due to reduction in the number of components and enhancement in assembling efficiency compared to the conventional wheel motor device in which the reduction gear mechanism is configured by a parallel gear mechanism.

For example, the gear housing includes a gear housing main body that is rotatable around the reference axis line relative to the variable-rotation output body housing. The reduced-rotation output member is connected to the gear housing main body in a relatively non-rotatable manner.

Alternatively, the reduced-rotation output member includes an output shaft portion, at least part of the output shaft portion being projected outward of the gear housing.

In the above various configurations, the rotation-component retrieving mechanism preferably includes an inner teeth arranged at the outer teeth member and an outer teeth arranged at an outer peripheral surface of the reduced-rotation output member so as to engage with the inner teeth.

Alternatively, the rotation-component retrieving mechanism includes an inner teeth arranged at the outer teeth member, a spline arranged at the reduced-rotation output member, and an oscillating member having a first engaging convex portion at a first end in the axis line direction, the first engaging convex portion engaging with the inner teeth, and a second engaging convex portion at a second end in the axis line direction, the second engaging convex portion engaging with the spline.

According to the first aspect of the present invention, there is further provided a wheel motor device including a variable-rotation output unit for outputting rotational power of a variable-rotation output body accommodated in a variable-rotation output body housing via a variable-rotation output shaft rotating about a reference axis line; and a reduction unit including a reduction gear mechanism for reducing rotation speed of the variable-rotation output shaft and a gear housing for accommodating the reduction gear mechanism.

The reduction gear mechanism includes an input shaft relatively non-rotatable about the reference axis line with respect to the variable-rotation output shaft; an eccentric member having a rotating center eccentric from the reference axis line, the eccentric member being relatively non-rotatable with respect to the input shaft; an outer teeth member supported at the eccentric member in a relatively rotatable manner, the outer teeth member having outer teeth arranged on the outer peripheral surface; an inner teeth member having an inner diameter greater than an outer diameter of the outer teeth member, the inner teeth member having an inner teeth engaging with the outer teeth, the inner teeth having a teeth number different from that of the outer teeth; and a reduced-rotation output member rotated about the reference axis line by the rotation-component around the reference axis line of the outer teeth member. The inner teeth member is fixed in a non-rotatable manner. The outer teeth member is formed with a cam hole extending in a direction parallel to the reference axis line. The reduced-rotation output member includes a carrier pin having an outer diameter smaller than an inner diameter of the cam hole and inserted into the cam hole, a flange portion supporting the carrier pin and rotating about the reference axis line, and an output shaft portion rotating about the reference axis line RL along with the flange portion. At least part of the output shaft portion is projected outward of the gear housing.

According to the configuration, the cost is reduced due to reduction in the number of components and enhancement in assembling efficiency compared to the conventional wheel motor device in which the reduction gear mechanism is configured by a planetary gear mechanism.

Further, miniaturization in the radial direction is achieved and the cost is reduced due to reduction in the number of components and enhancement in assembling efficiency compared to the conventional wheel motor device in which the reduction gear mechanism is configured by a parallel gear mechanism.

Furthermore, in the wheel motor device, the rotation reduced by the reduction gear mechanism is output outside of the gear housing via the output shaft portion. Therefore, by inserting the output shaft portion into the wheel of the driving wheel, the wheel motor device could be sufficiently adapted to a small vehicle with small tires.

For example, the eccentric member includes first and second eccentric members arranged in parallel to each other along the reference axis line direction and circumferentially displaced to each other by 180 degrees with the reference axis line as the reference. The outer teeth member includes first and second outer teeth members respectively corresponding to the first and second eccentric members. The first and second outer teeth members are respectively formed with first and second cam holes extending in a direction parallel to the reference axis line and positioned at substantially the same position in the circumferential direction with the reference axis line as the reference. The carrier pin is inserted into both the first and second cam holes facing to each other.

Alternatively, the reduction gear mechanism includes a balance weight supported by the input shaft in a relatively non-rotatable manner. The balance weight includes a weight portion extending in the direction opposite the eccentric direction of the eccentric member with the reference axis line as the reference.

In the above various configurations, preferably, the variable-rotation output body housing and the gear housing are removably connected to each other. The gear housing includes a gear housing main body, and a hollow member sandwiched between the variable-rotation output body housing and the gear housing main body, the hollow member acting as the inner teeth member. The reduction gear unit includes a first bearing member for supporting the reduced-rotation output member. The first bearing member includes an inner ring body inserted into a concave portion formed at an outer peripheral surface of the reduced-rotation output member, an outer ring body inserted into a concave portion formed across an inner peripheral surface of the gear housing main body and an inner peripheral surface of the hollow member, and a rolling element arranged between the inner ring body and the outer ring body.

In the above various configurations, preferably, the reduced-rotation output member is formed with a concave portion, which allows the input shaft to be inserted therein, at an inner end-face facing the input shaft. The reduction unit includes an input shaft bearing member interposed between an outer peripheral surface of the input shaft and an inner peripheral surface of the concave portion.

More preferably, the gear housing is capable of storing fluid. The reduced-rotation output member is formed with a fluid passage having a first end that opens to its outer peripheral surface within the internal space of the gear housing and a second end that opens to the concave portion.

More preferably, the gear housing is formed with a first fluid port for communicating the internal space and the outside. The first fluid port is arranged at a position overlapping, when seen from side view, a portion of the reduced-rotation output member where the first end of the fluid passage is positioned with a state in which the wheel motor device is mounted to a vehicle frame at a first position around the reference axis line.

More preferably, the gear housing is formed with a second fluid port positioned below the first fluid port with a state in which the wheel motor device is positioned at the first position.

More preferably, the wheel motor device is capable of being attached to the vehicle frame at a second position displaced from the first position about the reference axis line. The second fluid port overlaps, when seen from side view, a portion of the reduced-rotation output member where the first end of the fluid passage is positioned, and the first fluid port is positioned below the second fluid port, in a state where the wheel motor device is positioned at the second position. The position in the up and down direction of the first fluid port in a state where the wheel motor device is positioned at the first position, and the position in the up and down direction of the second fluid port in a state where the wheel motor device is positioned at the second position are displaced in the up and down direction with the reference axis line as the reference.

In the above various configurations, preferably, the variable-rotation output unit is a hydraulic motor unit that includes a hydraulic motor main body acting as the variable-rotation output body, a motor shaft acting as the variable-rotation output shaft, a motor housing acting as the variable-rotation output body housing, and a swash plate defining a supply/ suction fluid amount of the hydraulic motor main body. The swash plate is capable of being mounted within the motor housing at different positions about the reference axis line.

In the above various configurations, the wheel motor device further includes an attachment portion for attaching the wheel motor device to the vehicle frame.

For example, the attachment portion is arranged on an end on the side opposite the output side where the output shaft portion is projected.

Alternatively, the attachment portion is arranged at an intermediate region between an end on the output side where the output shaft portion is projected and an end opposite the end on the output side.

According to a second aspect of the present invention, there is provided a wheel motor device including a hydraulic motor unit for forming an HST in cooperation with a hydraulic pump unit spaced apart from the hydraulic motor unit; and a reduction unit for reducing speed of the output of the hydraulic motor unit.

The hydraulic motor unit includes a hydraulic motor main body fluidly connected to a hydraulic pump main body in the hydraulic pump unit; a motor shaft for supporting the hydraulic motor main body in a relatively non-rotatable manner; and a motor housing for accommodating the hydraulic motor main body and supporting the motor shaft in a freely rotatable manner about an axis line. The reduction unit includes a reduction gear mechanism for reducing speed of the rotational power from the motor shaft; and a gear housing directly or indirectly connected to the motor housing so as to accommodate the reduction gear mechanism, the gear housing having an inner space capable of storing fluid. The motor housing is formed with a pair of operation fluid passages having first ends fluidly connected to the hydraulic motor main body and second ends opened to the outer surface to form operation fluid ports. The gear housing is formed with a fluid port for communicating the inner space to the outside. An assembly formed by directly or indirectly connecting the motor housing and the gear housing is mounted to a vehicle frame at different positions around the axis line of the motor shaft.

According to the configuration, the operation fluid ports and the fluid port are directed to the desired directions. Therefore, conduits for connecting the operation fluid ports and the fluid port could be arranged to meet the specification and/or the layout of the vehicle.

According to the second aspect of the present invention, there is further provided a wheel motor device including a hydraulic motor unit for forming an HST in cooperation with a hydraulic pump unit spaced apart from the hydraulic motor unit; and a reduction unit for reducing speed of the output of the hydraulic motor unit.

The hydraulic motor unit includes a hydraulic motor main body fluidly connected to a hydraulic pump main body in the hydraulic pump unit; a motor shaft for supporting the hydraulic motor main body in a relatively non-rotatable manner; and a motor housing for accommodating the hydraulic motor main body and supporting the motor shaft in a freely rotatable manner about an axis line. The reduction unit includes a reduction gear mechanism for reducing speed of the rotational power from the motor shaft; and a gear housing directly or indirectly connected to the motor housing so as to accommodate the reduction gear mechanism, the gear housing having an inner space capable of storing fluid. The motor housing is formed with a pair of operation fluid passages having first ends fluidly connected to the hydraulic motor main body and second ends opened to the outer surface to form operation fluid ports. The gear housing is formed with a fluid port for communicating the inner space to the outside. The gear housing is capable of being connected to the motor housing at different positions around the axis line of the motor shaft.

According to the configuration, the operation fluid ports and the fluid port are independently directed to the desired directions. Therefore, conduits for connecting the operation fluid ports and the fluid port could be arranged to meet the specification and/or the layout of the vehicle.

According to the second aspect of the present invention, there is further provided a wheel motor device including a hydraulic motor unit for forming an HST in cooperation with a hydraulic pump unit spaced apart from the hydraulic motor unit; and a reduction unit for reducing speed of the output of the hydraulic motor unit.

The hydraulic motor unit includes a hydraulic motor main body fluidly connected to a hydraulic pump main body in the hydraulic pump unit; a motor shaft for supporting the hydraulic motor main body in a relatively non-rotatable manner; and a motor housing for accommodating the hydraulic motor main body and supporting the motor shaft in a freely rotatable manner about an axis line. The reduction unit includes a reduction gear mechanism for reducing speed of the rotational power from the motor shaft; and a gear housing directly or indirectly connected to the motor housing so as to accommodate the reduction gear mechanism, the gear housing having an inner space capable of storing fluid. The reduction gear mechanism includes an input shaft relatively non-rotatable about its axis line with respect to the motor shaft on the reference axis line; an eccentric member being eccentric from the reference axis line and being relatively non-rotatable with respect to the input shaft; an outer teeth member supported at the eccentric member in a relatively rotatable manner, the outer teeth member having outer teeth arranged on the outer peripheral surface; an inner teeth member fixed in a non-rotatable manner at a position surrounding the outer teeth member, the inner teeth member having an inner teeth engaging with the outer teeth, the inner teeth having a teeth number different from that of the outer teeth; and a reduced-rotation output member rotated about the reference axis line by the rotation-component around the reference axis line of the outer teeth member. The outer teeth member is formed with a cam hole extending in a direction parallel to the reference axis line. The reduced-rotation output member includes a carrier pin having an outer diameter smaller than an inner diameter of the cam hole and inserted into the cam hole, a flange portion supporting the carrier pin and rotating about the reference axis line, and an output shaft portion rotating about the reference axis line RL along with the flange portion, at least part of the output shaft portion being projected outward of the gear housing. The gear housing includes a gear housing main body with an opening at a end-face facing the motor housing, and a hollow member sandwiched between the motor housing and the gear housing main body, the hollow member acting as the inner teeth member. The motor housing is formed with a pair of operation fluid passages having first ends fluidly connected to the hydraulic motor main body and second ends opened to the outer surface to form operation fluid ports. The gear housing main body is formed with a fluid port for communicating the inner space to the outside. The gear housing main body is capable of being connected to the hollow member at different positions around the reference axis line.

According to the configuration, the fluid port formed at the gear housing main body and the operation fluid ports formed at the motor housing are independently directed to the respective desired directions. Therefore, conduits for connecting the operation fluid ports and the fluid port could be arranged to meet the specification and/or the layout of the vehicle.

According to the second aspect of the present invention, there is further provided a wheel motor device including a hydraulic motor unit for forming an HST in cooperation with a hydraulic pump unit spaced apart from the hydraulic motor unit; and a reduction unit for reducing speed of the output of the hydraulic motor unit.

The hydraulic motor unit includes a hydraulic motor main body fluidly connected to a hydraulic pump main body in the hydraulic pump unit; a motor shaft for supporting the hydraulic motor main body in a relatively non-rotatable manner; a motor housing for accommodating the hydraulic motor main body and supporting the motor shaft in a freely rotatable manner about an axis line; and a swash plate defining a supply/suction fluid amount of the hydraulic motor main body, the swash plate being removably connected to the motor housing. The motor housing includes a motor housing main body with an opening, through which the hydraulic motor main body can pass, at an end-face on a first side in the axis line of the motor shaft, and a port block connected to the motor housing main body so as to close the opening with contacting the hydraulic motor main body. The port block is formed with a pair of operation fluid passages having first ends fluidly connected to the hydraulic motor main body and second ends opened to the outer surface to form operation fluid ports. The gear housing is formed with a fluid port for communicating the inner space to the outside. The port block and the swash plate are capable of being fixed at different positions around the motor shaft while fixing the relative position of the gear housing and the motor housing main body about the motor shaft.

According to the configuration, the fluid port formed at the gear housing main body and the operation fluid ports formed at the motor housing are independently directed to the respective desired directions. Therefore, conduits for connecting the operation fluid ports and the fluid port could be arranged to meet the specification and/or the layout of the vehicle.

In the above various configurations, a plurality of fluid ports are preferably arranged around the output shaft.

According to the second aspect of the present invention, there is further provided a wheel motor device including a hydraulic motor unit for forming an HST in cooperation with a hydraulic pump unit spaced apart from the hydraulic motor unit; and a reduction unit for reducing speed of the output of the hydraulic motor unit.

The hydraulic motor unit includes a hydraulic motor main body fluidly connected to a hydraulic pump main body in the hydraulic pump unit; a motor shaft for supporting the hydraulic motor main body in a relatively non-rotatable manner; a motor housing for accommodating the hydraulic motor main body and supporting the motor shaft in a freely rotatable manner about an axis line; and a swash plate defining a supply/ suction fluid amount of the hydraulic motor main body, the swash plate being removably connected to the motor housing. The reduction unit includes a reduction gear mechanism for reducing speed of the rotational power from the motor shaft; and a gear housing directly or indirectly connected to the motor housing so as to accommodate the reduction gear mechanism, the gear housing having an inner space capable of storing fluid. The motor housing is formed with a pair of operation fluid passages having first ends fluidly connected to the hydraulic motor main body and second ends opened to the outer surface to form operation fluid ports. The swash plate is capable of being fixed to the motor housing at a first position around the motor shaft and at a second position displaced from the first position by 180 degrees around the motor shaft.

According to the relevant configuration, a pair of wheel motor devices respectively applied to a pair of left and right driving wheels could have the operation fluid ports directed in the same direction, while using common components in the pair of wheel motor devices.

In the second aspect of the present invention, the reduction gear mechanism may be, for example, a hypocycloid reduction mechanism, a planetary gear mechanism or a parallel (external) gear mechanism.

### BRIEF DESCRIPTION OF THE DRAWINGS

The above, and other objects, features and advantages of the present invention will become apparent from the detailed description thereof in conjunction with the accompanying drawings wherein.
Fig. 1 is a plan view of a vehicle to which a wheel motor device according to a first embodiment of the present invention is applied.
Fig. 2 is a cross sectional view of the wheel motor device applied to one driving wheel in the working vehicle, the cross sectional view showing the cross section displaced 45 degrees from a vertical plane.
Fig. 3 is an enlarged view of the wheel motor device shown in Fig. 2.
Fig. 4 is a vertical cross sectional view of the wheel motor device taken along line IV-IV in Fig. 1.
Fig. 5 is a partially enlarged view of the vicinity of a hydraulic motor main body of the wheel motor device.
Fig. 6 is a partially enlarged view of the vicinity of the hydraulic motor main body, the view showing a swash plate mounted at one position around a motor shaft, and showing the swash plate mounted at the other position displaced from one position by 180 degrees about the motor shaft.
Fig. 7 is a partially enlarged view of the vicinity of the hydraulic motor main body, in a modified embodiment where a swash plate of a type at which the free end of the piston is directly contacted is provided.
Fig. 8 is a partially enlarged view of the vicinity of the hydraulic motor main body, in another modified embodiment where a movable swash plate is provided.
Fig. 9 is a vertical cross sectional view of a reduction gear mechanism of the wheel motor device taken along line IX-IX in Fig. 4.
Fig. 10 is a cross sectional view taken along line X-X in Fig. 4.
Fig. 11 is a cross sectional view taken along line X-X in Fig. 4 in a state where the wheel motor device is mounted to a vehicle frame at a second position circumferentially displaced around the motor shaft from a first position shown in Fig. 10.

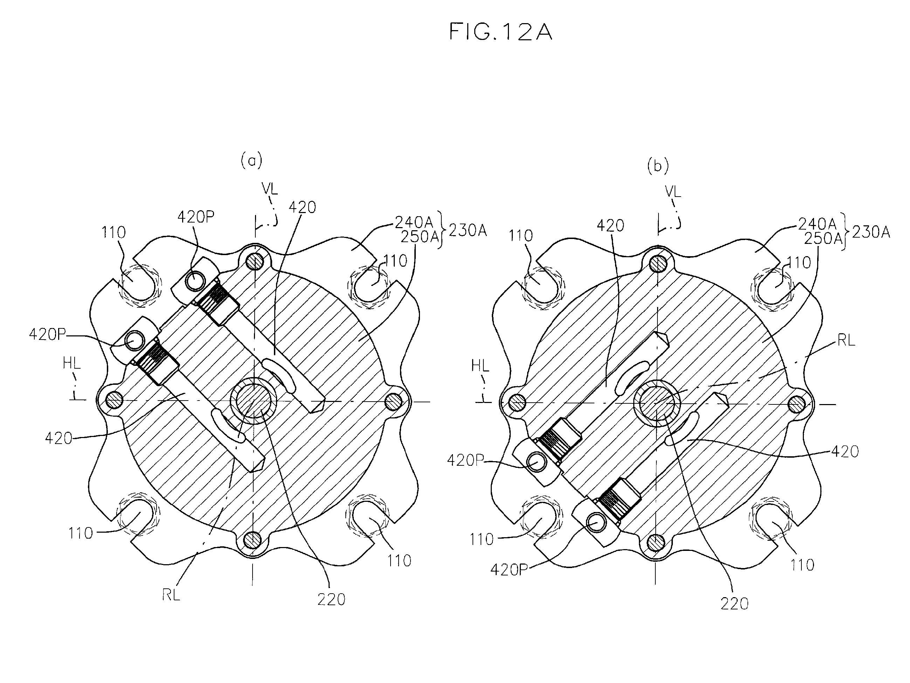

Fig. 12A is a cross sectional view of a motor-side port block of the wheel motor device, Fig. 12A(a) showing a state where the port block and the swash plate is positioned at a first position around the motor shaft with a gear housing and a motor housing main body positioned at a predetermined position around the motor shaft, and Fig. 12A(b) showing a state where the port block and the swash plate is positioned at a second position circumferentially displaced from the first position by 90 degrees around the motor shaft while maintaining the gear housing and the motor housing main body at the predetermined position.

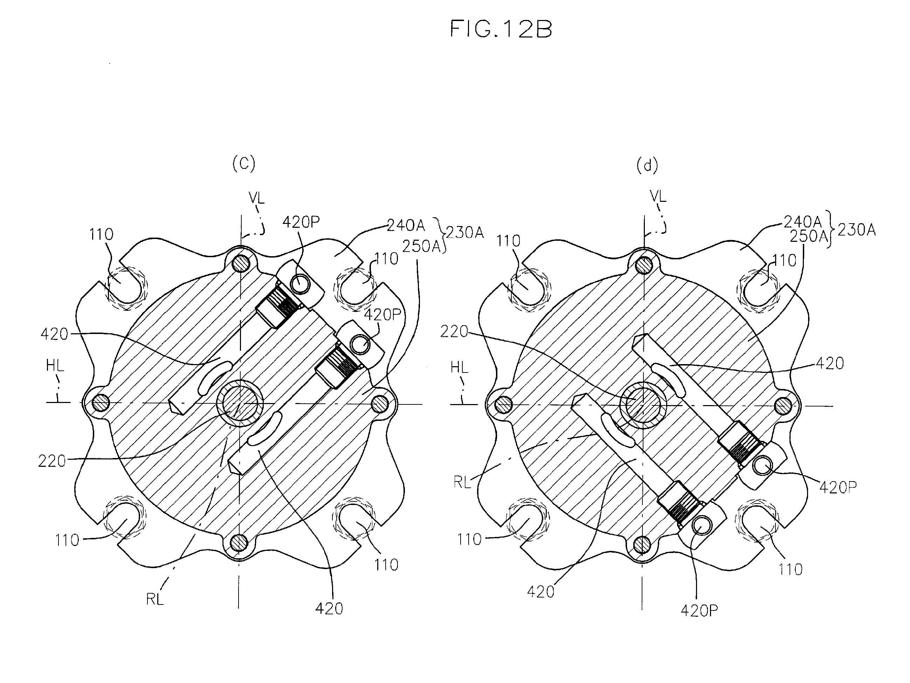

Fig. 12B is a cross sectional view of a motor-side port block of the wheel motor device, Fig. 12B(c) showing a state where the port block and the swash plate is positioned at a third position circumferentially displaced from the second position by 90 degrees around the motor shaft while maintaining the gear housing and the motor housing main body at the predetermined position, and Fig. 12B(d) showing a state where the port block and the swash plate is positioned at a fourth position circumferentially displaced from the third position by 90 degrees around the motor shaft while maintaining the gear housing and the motor housing main body at the predetermined position.
Fig. 13 is a cross sectional view of a modified wheel motor device of a first embodiment in which an attachment portion for attaching the wheel motor device to the vehicle frame is arranged at a intermediate region between the inner end and the outer end in the vehicle width direction.
Fig. 14 is a cross sectional view of a wheel motor device according to a second embodiment of the present invention applied to the left side driving wheel in the working vehicle, the cross sectional view showing a cross section displaced 45 degrees from the vertical plane.
Fig. 15 is a vertical cross sectional view of the wheel motor device of the second embodiment.
Fig. 16 is a cross sectional view of a modified wheel motor device of the second embodiment in which the attachment portion is arranged at an intermediate region between the inner end and the outer end in the vehicle width direction.
Fig. 17 is a cross sectional view of a wheel motor device according to a third embodiment of the present invention applied to the left side driving wheel in the working vehicle, the cross sectional view showing a cross section displaced 45 degrees from the vertical plane.
Fig. 18 shows an enlarged view of Fig. 17.
Fig. 19 is a vertical cross sectional view of the wheel motor device shown in Figs. 17 and 18.
Fig. 20 is a cross sectional view taken along line XX-XX of Fig. 19.
Fig. 21 is a cross sectional view of a modified wheel motor device of the third embodiment in which the attachment portion is arranged at an intermediate region between the inner end and the outer end in the vehicle width direction.
Fig. 22 is a cross sectional view of a wheel motor device according to a fourth embodiment of the present invention applied to the left side driving wheel in the working vehicle, the cross sectional view showing a cross section displaced 45 degrees from the vertical plane.
Fig. 23 is a vertical cross sectional view of the wheel motor device shown in Fig. 22.
Fig. 24 is a cross sectional view of a modified wheel motor device of the fourth embodiment in which the attachment portion is arranged at an intermediate region between the inner end and the outer end in the vehicle width direction.
Fig. 25 is a cross sectional view of a wheel motor device according to a fifth embodiment of the present invention.
Fig. 26 is a cross sectional view of a modified wheel motor device of the fifth embodiment.
Fig. 27 is a cross sectional view of another modified wheel motor device of the fifth embodiment.
Fig. 28 is a cross sectional view of a wheel motor device according to a sixth embodiment of the present invention.
Fig. 29 is a cross sectional view of a modified wheel motor device of the sixth embodiment.
Fig. 30 is a plan view of another vehicle to which the wheel motor device according to the above embodiments could be applied, the vehicle including a pair of hydraulic pump units.
Fig. 31 is a plan view of still another vehicle to which the wheel motor device according to the above embodiments could be applied.
Fig. 32 is a plan view of the vehicle shown in Fig.1, the vehicle further including an oil cooler.
Fig. 33 is a plan view of the vehicle shown in Fig. 30, the vehicle further including an oil cooler.
Fig. 34 is a plan view of the vehicle shown in Fig. 31, the vehicle further including an oil cooler.

### DETAILED DESCRIPTION OF THE PREFERRED EMBODIMENTS

### First Embodiment

One preferred embodiment of a wheel motor device according to the present invention will now be described with reference to the accompanied drawings.

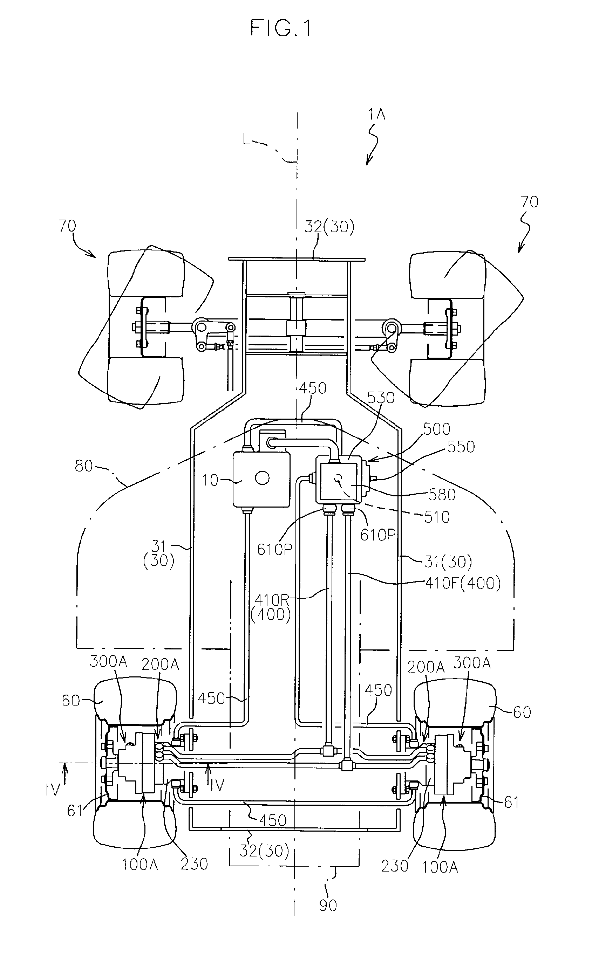

Fig. 1 shows a plan view of a vehicle 1A to which a wheel motor device 100A according to the present embodiment is applied.

The wheel motor device 100A includes a variable-rotation output unit for outputting the variable-rotation power in cooperation with an actuator arranged spaced apart from the wheel motor device 100A, and a reduction unit 300A for reducing speed of the rotational power from the variable-rotation output unit and transmitting the result to the driving wheel.

The wheel motor device 100A according to the present embodiment includes a hydraulic motor unit 200A as the variable-rotation output unit, as hereinafter described.

Therefore, the working vehicle 1A includes a hydraulic pump unit 500 as the actuator.

Specifically, the working vehicle 1A includes, as shown in Fig. 1, a vehicle frame 30 having a pair of main frame 31 that extends along the longitudinal direction of the vehicle and a cross member 32 that extends between the pair of main frame 31, a pair of driving wheels 60, wheel motor devices 100A according to the present embodiment configured so as to respectively drive the pair of driving wheels 60, an driving power source (not shown) supported by the vehicle frame 30, the hydraulic pump unit 500 operatively driven by the driving power source, the hydraulic pump unit 500 cooperates with hydraulic motor units of the pair of wheel motor devices 100A to form HST (hydrostatic transmission).

The working vehicle 1A shown in Fig. 1 includes, in addition to the above components, a pair of steering wheels 70 supported at a front portion of the vehicle frame 30, a mower device 80 disposed between the pair of steering wheels 70 and the pair of the driving wheels 60 with respect to the longitudinal direction of the vehicle, configuration, a duct 90 forming a conveying path for guiding the grass cut by the mower device 80 toward the rear of the vehicle, and an external fluid tank 10 used as reservoir of operation fluid.

The hydraulic pump unit 500 is supported by the pair of main frames 31 in a state capable of receiving power from the driving power source via a power transmission mechanism such as a pulley.

Specifically, the hydraulic pump unit 500 includes an input shat 510 operatively connected to an output shaft of the driving power source, and a single hydraulic pump main body (not shown) driven by the input shaft 510, and a pump case 530 accommodating the hydraulic pump main body and supporting the input shaft 510.

In the present embodiment, the hydraulic pump unit 500 is of a variable displacement type in which a discharging direction and the supply/ suction fluid amount of the hydraulic pump main body can be changed according to an external operation.

That is, the hydraulic pump unit 500 includes an output adjusting member (not shown) such as a movable swash plate for changing the discharging direction and the supply/ suction fluid amount of the hydraulic pump main body, and a control shaft 550 (see Fig. 1) for operating the slanting position of the output adjusting member, in addition to the above configuration.

The control shaft 550 is coupled to a speed changing operation member such as a speed changing pedal and the like arranged in the vicinity of the driver's seat by way of an appropriate link mechanism.

The hydraulic pump main body is fluidly connected to the hydraulic motor main body in the wheel motor device 100A by way of a pair of operation fluid lines 400.

Specifically, the pump case 530 is formed with a pair of pump-side operation fluid passages (not shown) having first ends fluidly connected to the hydraulic pump main body and second ends opened to an external surface to form a pair of pump-side operation fluid ports 610P (see Fig. 1).

As hereinafter described in detail, a motor housing 230A in the hydraulic motor unit 200A is formed with a pair of motor-side operation fluid passages 420 having first ends fluidly connected to a hydraulic motor main body 210 of the hydraulic motor unit 200A and second ends opened to the external surface to form a pair of motor-side operation fluid ports 420P.

The pair of pump-side operation fluid passages and the pair of motor-side operation fluid passages 420 are fluidly connected by a pair of operation fluid conduits 420 thereby forming the pair of operation fluid lines 400.

Specifically, the hydraulic pump unit 500 has the single hydraulic pump main body in the present embodiment, as previously described.

One operation fluid conduit 410F of the pair of operation fluid conduits 410 has a first end fluidly connected to a forward-movement high-pressure-side operation fluid passage out of the pair of pump-side operation fluid passages and second ends branched to each other.

The other operation fluid conduit 410R of the pair of operation fluid conduits 410 has a first end fluidly connected to a rearward-movement high-pressure-side operation fluid passage out of the pair of pump-side operation passages and second ends branched to each other.

The branched second ends of one operation fluid conduit 410F are fluidly connected to forward-movement high-pressure-side operation fluid passages 420 of the pair of wheel motor devices 100A, respectively.

Similarly, the branched second ends of the other operation fluid conduit 410R are fluidly connected to rearward-movement motor-side operation fluid passages 420 of the pair of wheel motor devices 100A, respectively.

The pump case 530 includes pump case main body (not shown) having an opening through which the hydraulic pump main body can be passed, and a pump-side port block (not shown) connected to the pump case main body so as to close the opening.

The pair of pump-side operation fluid passages are formed in the pump-side port block.

The hydraulic pump unit 500 further includes a charge pump unit 580, as shown in Fig.1.

The charge pump unit 500 includes a charge pump main (not shown) body driven by the pump shaft 510, and a charge pump case connected to the pump case 530 so as to surround the charge pump main body.

Pressured fluid supplied from the charge pump unit 580 is used, for example, to replenish operation fluid of the HST.

The wheel motor device 100A will now be described.

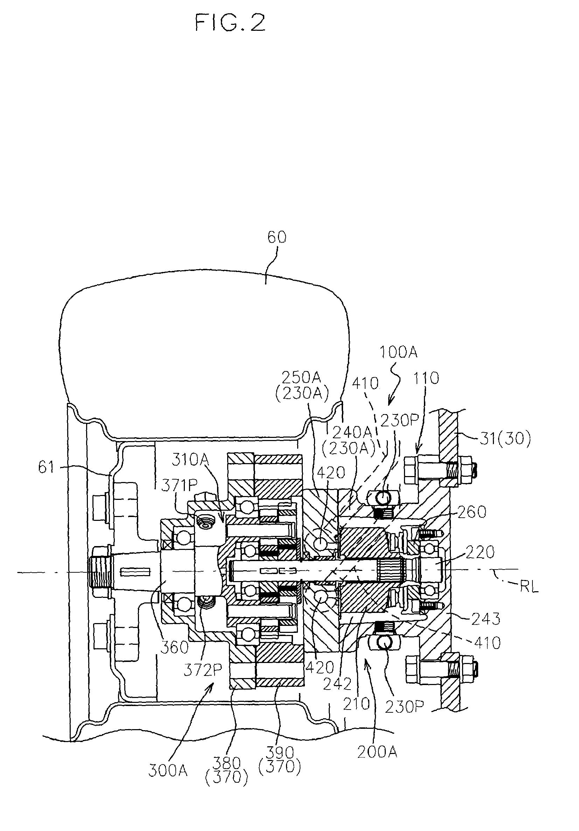

Fig. 2 is a cross sectional view of the wheel motor device 100A applied to one driving wheel 60 (left side driving wheel in the figure) in the working vehicle 1A, the cross sectional view showing the cross section displaced 45 degrees from a vertical plane.

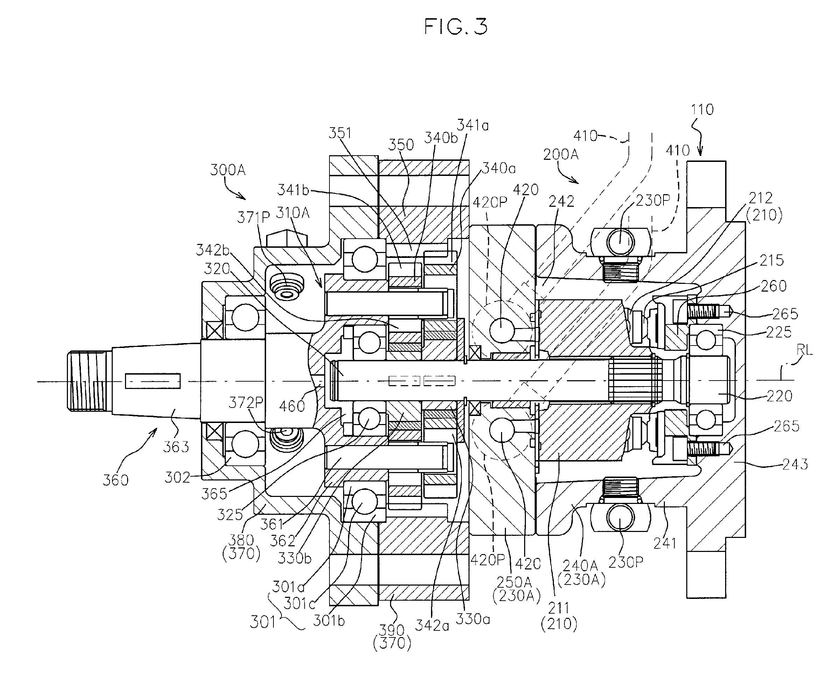

Fig. 3 is an enlarged view of the wheel motor device 100A in Fig. 2.

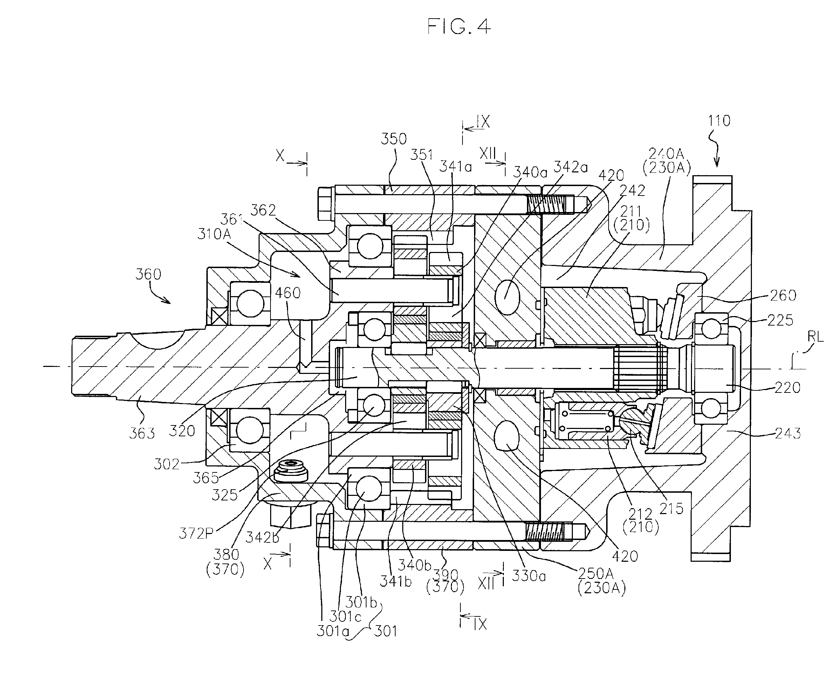

Fig. 4 is a longitudinal cross sectional view of the wheel motor device 100A taken along line IV-IV in Fig. 1.

The wheel motor device 100A applied to one driving wheel (left side driving wheel) 60 and the wheel motor device 100A applied to the other driving wheel (right side driving wheel) 60 are in a mirror image relationship when seen in plan view with a virtual center longitudinal line L (see Fig. 1) of the vehicle as the reference.

The wheel motor device 100A includes the hydraulic motor unit 200A functioning as the variable-rotation output unit and a reduction unit 300A for reducing speed of the rotational power from the hydraulic motor unit 200A and transmitting the result to the corresponding driving wheel 60, as shown in Fig. 2 to Fig. 4.

As described above, the hydraulic motor unit 200A configures an HST for outputting a normal or reverse non-stepwise speed change rotation in cooperation with the hydraulic pump unit 500.

Specifically, as shown in Fig. 2 to Fig. 4, the hydraulic motor unit 200A includes a hydraulic motor main body 210 fluidly connected to the hydraulic pump main body through the pair of operation fluid lines 400, a motor shaft 220 supporting the hydraulic motor main body 210 in a relatively non-rotatable manner, a motor housing 230A accommodating the hydraulic motor main body 210 and supporting the motor shaft 220 in a freely rotatable manner around its axis, and a swash plate 260 defining a supply/ suction fluid amount of the hydraulic motor main body 210.

The motor housing 230A is formed with a pair of motor-side operation fluid passages 420 having first ends fluidly connected to the hydraulic motor main body 210 and second ends opened to the external surface to form the motor-side operation fluid ports 420P.

Specifically, the motor housing 230A includes a motor housing main body 240A surrounding the hydraulic motor main body 210, and a motor-side port block 250A removably coupled to the motor housing main body 240A.

The motor housing main body 240A has a hollow peripheral wall 241 surrounding the hydraulic motor main body 210, as shown in Fig. 3 and Fig. 4.

The peripheral wall 241 has a first end side in the axis line direction formed with an opening 242 through which the hydraulic motor main body 210 is inserted, and a second end side in the axis line direction formed into a blocked end-face 243.

The motor-side port block 250A is removably coupled to the motor housing main body 241 so as to block the opening 242 with the hydraulic motor main body 210 sandwiched between the blocked end-face 243.

In the present embodiment, the motor housing 230A is formed with a fluid port 230P for communicating a motor accommodating space defined by the motor housing main body 240A and the motor-side port block 250A to the outside.

As shown in Fig. 2 and Fig. 3, a pair of fluid ports 230P is preferably formed. One fluid port 230P is used as a fluid flow-in port and the other fluid port 230P is used as a fluid flow-out port.

According to such configuration, the fluid is prevented from accumulating in the motor accommodating space.

More preferably, the internal space of the fluid tank 10, the internal space of each motor housing 230A in the pair of wheel motor devices 100A, and the internal space of the pump housing 530 in the hydraulic pump unit 500 are fluidly connected in an endless manner by way of an external conduit 450, as shown in Fig. 1.

According to such configuration, the accumulation of the stored fluid is prevented while miniaturizing the fluid tank 10, and effectively preventing increase in temperature of the stored fluid.

The pair of motor-side operation fluid passages 420 are formed in the motor-side port block 250A.

More specifically, the motor-side port block 250A includes a motor contacting surface, at which the hydraulic motor main body 210 is slidably contacted, on the inner surface facing the motor accommodating space.

The pair of motor-side operation fluid passages 420 has first ends opened to the motor contacting surface by way of kidney ports and second ends opened to the outer surface to form the motor-side operation fluid ports 420P.

The hydraulic motor main body 210 is supported by the motor shaft 220 in a relatively non-rotatable manner while being sandwiched between the motor contacting surface and the swash plate 260.

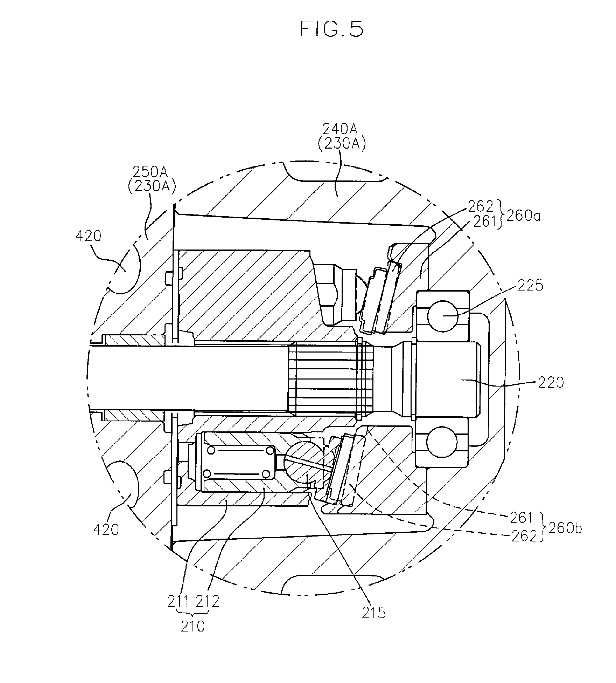

Fig. 5 shows a partially enlarged view of the vicinity of the hydraulic motor main body.

Specifically, the hydraulic motor main body 210 includes a cylinder block 211 supported by the motor shaft 220 in a relatively non-rotatable manner while contacting the motor contacting surface so as to supply or suction the fluid to or from the pair of motor-side operation fluid passages 420, and pistons 212 accommodated in the cylinder block 211 in a freely forward and backward movable manner in the axis line direction, the piston 212 having the free end operatively contacting the swash plate 260, as shown in Fig. 3 to Fig. 5.

In the present embodiment, a shoe 215 is arranged at the free end of the piston 212, so that the piston 212 contacts the swash plate 260 by way of the shoe 215, as shown in Fig. 5.

The swash plate 260 regulates the forward and backward movement range of the piston 212, thereby defining the supply/ suction fluid amount of the hydraulic motor main body 210.

The swash plate 260 is preferably removable to the motor housing main body 240A, as shown in Fig. 3 to Fig. 5.

In the present embodiment, the swash plate 260 is removably fixed to the blocked end-face 243 in the motor housing main body 240A by way of fastening members 265.

As shown in Fig. 5, the swash plate 260 includes a swash plate receiving member 261 that is removable with respect to the motor housing main body 240A, and a sheet member 262 held at the swash plate receiving member 261, in the present embodiment.

According to the configuration where the swash plate 260 separate from the motor housing main body 240A is provided, one swash plate 260a (solid line of Fig. 5) having a predetermined slanting angle, and the other swash plate 260b (broken line of Fig. 5) having a different slanting angle can be easily exchanged, whereby the non-stepwise speed changing range of the HST can be easily changed.

More preferably, the swash plate 260 is configured so as to be attached to the motor housing main body 240A at different positions about the motor shaft 220.

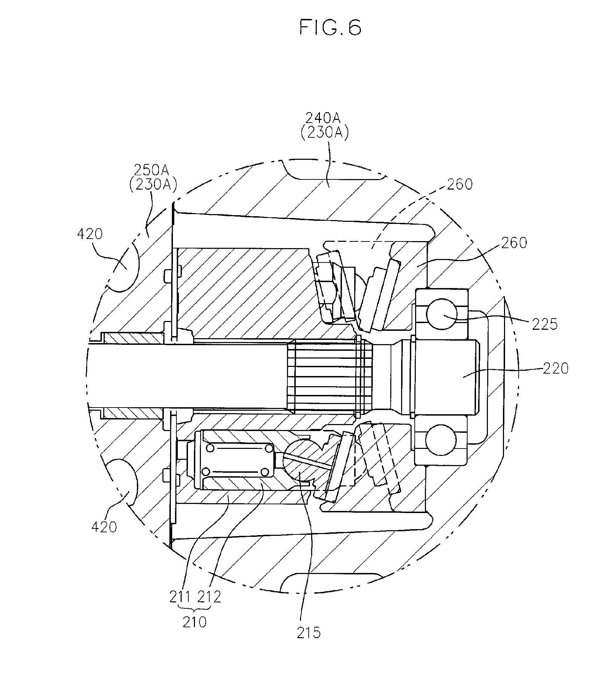

According to the configuration, in a case where the pair of wheel motor devices 100A having the same configuration are respectively applied to the pair of left and right driving wheels 60, the arrangement of the pair of motor-side operation fluid ports 420P in one wheel motor device 100A and the arrangement of the pair of motor-side operation fluid ports 420P' in the other wheel motor device 100A' can be positioned in a plane symmetric manner with the virtual central vertical plane L (see Fig. 1) of the vehicle as the reference by simply displacing the swash plate 260 (solid line of Fig. 6) in one wheel motor device 100A by 180 degrees about the motor shaft 220 with respect to the swash plate 260' (broken line in Fig. 6) of the other wheel motor device 100A'.

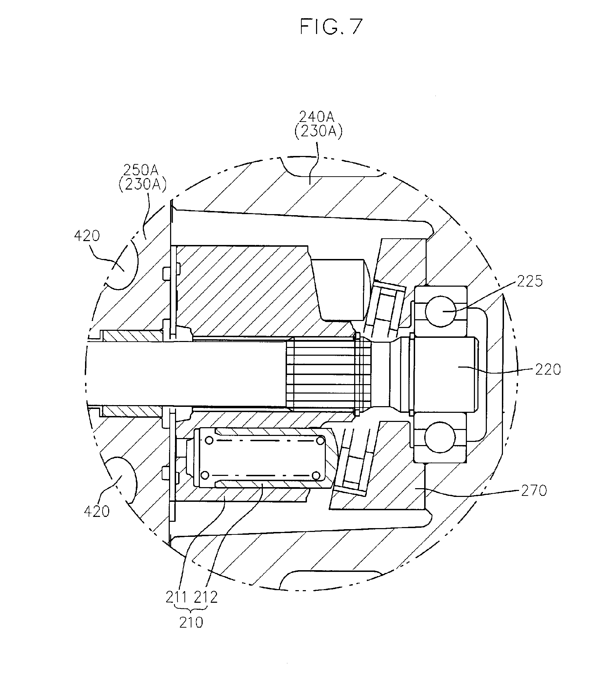

In the present embodiment, the swash plate 260 and the piston 212 are configured so as to contact by way of the shoe 215, as described above, but a swash plate 270 of a type at which the free end of the piston 212 is directly contacted may also be arranged, as shown in Fig. 7.

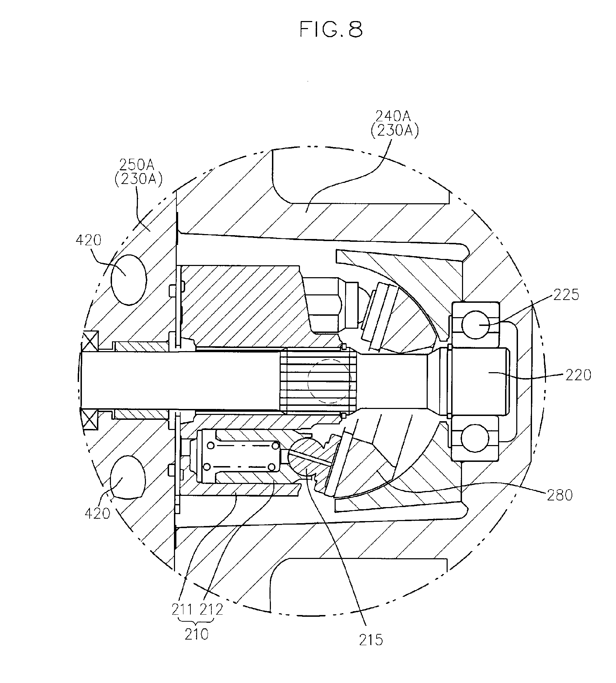

Further, the hydraulic motor unit 200A includes a fixed swash plate 260 in the present embodiment, but may include a movable swash plate 280 in place thereof (see Fig. 8).

According to such configuration, the non-stepwise speed changing range of the HST formed by the hydraulic motor main body 210 and the hydraulic pump main body could be enlarged.

As shown in Fig. 8, in a case where the hydraulic motor unit 200A includes the movable swash plate 280, a control shaft (not shown) for slanting the movable swash plate 280 is provided in the hydraulic motor unit 200A.

In place of or in addition to the exchange of the above described swash plates 260, 270, 280 or the change in the arranging position of the swash plates 260, 270, the non-stepwise speed changing range of the HST can be also changed by changing the hydraulic motor main body 210.

Specifically, the hydraulic motor main body 210 may be changed to the hydraulic motor main body having a different number of pistons or to the hydraulic motor main body having a different capacity per one piston.

The motor shaft 220 is supported by the motor housing 230A in a state that a first end forming the output end extends outward from the motor housing 230A.

In the present embodiment, the motor shaft 220 has the first end passing through the motor-side port block 250A to extend outward, and a second end supported at the blocked end wall 243 of the motor housing main body 240A so as to terminate in the internal space of the motor housing 230A.

The reduction unit 300A is configured to reduce speed of the variable-rotation power from the variable-rotation output unit and transmit the result to the wheel 61 of the corresponding driving wheel 60, as described above.

The variable-rotation output unit can be miniaturized by providing the reduction unit 300A.

In particular, in a case where the hydraulic motor unit 200A is arranged as the variable-rotation output unit as in the present embodiment, the low torque/high rotational hydraulic motor main body can be used as the hydraulic motor main body 210 by providing the reduction unit 300A, and thus the hydraulic motor main body 210 could be miniaturized and the operation fluid leakage amount from the hydraulic motor main body 210 could be reduced.

Specifically, the reduction unit 300A includes a reduction gear mechanism 310A for reducing speed of the rotational power of the motor shaft 220, and a gear housing 370 removably coupled to the motor housing 230A so as to accommodate the reduction gear mechanism 300A, as shown in Fig. 3 and Fig. 4.

In the present embodiment, the reduction gear mechanism 310A is a hypocycloid reduction mechanism.

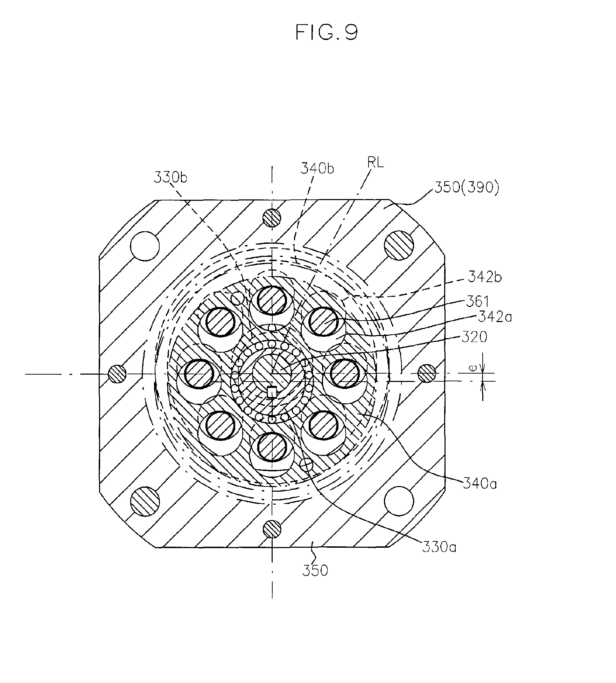

Fig. 9 is a vertical cross sectional view of the reduction gear mechanism 300A taken along line IX-IX in Fig. 4.

As shown in Fig. 3, Fig. 4, and Fig. 9, the reduction gear mechanism 310A includes an input shaft 320, which is relatively non-rotatable about the axis line with respect to the motor shaft 220, on the same axis line as the motor shaft 220 positioned on a reference axis line RL, an eccentric member 330 having a rotating center eccentric from the reference axis line RL, the eccentric member 330 being relatively non-rotatable with respect to the input shaft 320, an outer teeth member 340 externally inserted around the eccentric member 330 in a relatively rotatable manner, an inner teeth member 350 having an inner diameter greater than an outer diameter of the outer teeth member 340 and fixed in a non-rotatable manner at a position surrounding the outer teeth member 340, and a reduced-rotation output member 360 that rotates about the reference axis line RL by the rotation-component around the reference axis line RL of the outer teeth member 340.

As shown in Fig. 3 and Fig. 4, the input shaft 320 is integrally formed with the motor shaft 220 in the present embodiment.

The input shaft 320 may obviously be formed as a separate body from the motor shaft 220.

As shown in Fig. 9, the eccentric member 330 has the axis line displaced with respect to the reference axis line RL by e, and eccentrically rotates according to the rotation of the input shaft 320 about the reference axis line.

The eccentric member 330 is separate from the input shaft 320 in the present embodiment, but the eccentric member 330 may obviously be integrally formed with the input shaft.

The outer teeth member 340 includes outer teeth 341 of teeth number Z1 arranged on the outer peripheral surface, and a cam hole 342 passing between one end-face and the other end-face in the axis direction.

A plurality of cam holes 342 are preferably formed around the reference axis line RL.

The inner teeth member 350 has the inner teeth 351, which engages with the outer teeth 341, arranged on the inner peripheral surface. The inner teeth 351 has teeth number Z2 different from the teeth number Z 1 of the outer teeth 341.

The reduced-rotation output member 360 includes a carrier pin 361 inserted into the cam hole 342, a flange portion 362 that supports the carrier pin 361 and rotates about the reference axis line RL, and an output shaft portion 363 that rotates about the reference axis line RL along with the flange portion 362.

The carrier pin 361 has a smaller diameter than the cam hole 342 by an amount corresponding to the eccentric amount e of the eccentric member 330 with respect to the reference axis line RL, as shown in Fig. 9.

As described above, the plurality of cam holes 342 are formed in the outer teeth member 340 in the present embodiment.

Therefore, the reduced-rotation output member 360 includes a plurality of carrier pins 361 respectively inserted into the plurality of cam holes 342.

In the present embodiment, the power is transmitted form the reduced-rotation output member 360 to the wheel 61 of the corresponding driving wheel 60.

Specifically, the output shaft portion 363 is supported by the gear housing 370 so as to extend between inward and outward of the gear housing 370 on the reference axis line RL, as shown in Fig. 3 and Fig. 4.

The flange portion 362 is arranged in a relatively non-rotatable manner at a part, which is positioned in the inner space of the gear housing 370, of the output shaft portion 363.

In the reduction gear mechanism 310A of the configuration, when the eccentric member 330 eccentrically rotates with respect to the reference axis line RL according to the rotation of the input shaft 320 about the reference axis line RL, the outer teeth member 340 also eccentrically rotates along with the eccentric member 330 with respect to the reference axis line RL. Since the outer teeth 341 engages with the inner teeth 351, the outer teeth member 340 is rotated with the speed reduced by a reduction ratio defined by the teeth number Z1 of the outer teeth 341 and the teeth number Z2 of the inner teeth 351.

Through the reduced eccentric rotation of the outer teeth member 340, the carrier pin 361 revolves about the reference axis line RL while rolling on the inner peripheral surface of the cam hole 342. The revolution about the reference axis line of the carrier pin 361 is then output outward of the gear housing 370 through the output shaft portion 363.

Preferably, the wheel motor device 100A includes a pair of first and second eccentric members 330a, 330b arranged in parallel to each other along the reference axis line direction as the eccentric member 330, and further includes a pair of first and second outer teeth members 340a, 340b respectively corresponding to the first and second eccentric members 330a, 330b as the outer teeth member 340, as shown in Fig. 2 to Fig. 4.

Specifically, the first and second eccentric members 330a, 330b are displaced to each other by 180 degrees with the reference axis line RL as the reference, as shown in Fig. 9.

The first and second outer teeth members 340a, 340b are respectively formed with first and second outer teeth 341a, 341b and first and second cam holes 342a, 342b extending in a direction parallel to the reference axis line RL, the first and second cam holes 342a, 342b being positioned at substantially the same position in the circumferential direction with the reference axis line RL as the reference.

The eccentric torque involved in the rotation of the eccentric member 330 is canceled by providing the first and second eccentric members 330a, 330b displaced to each other by 180 degrees about the reference axis line RL, and thus the input shaft 320 stably rotates about the reference axis line RL.

In this aspect, the inner teeth 351 is engaged with both the first and second outer teeth 341a, 341b and the carrier pin 361 is inserted into both the first and second cam holes 342a, 342b facing each other.

Preferably, the reduced-rotation output member 360 is formed with a concave portion 365, which allows the input shaft 320 to be inserted therein, at the inner end-face facing the input shaft 320, as shown in Fig. 3 and Fig. 4. An input shaft bearing member 325 may be provided between the outer peripheral surface of the input shaft 320 and the inner peripheral surface of the concave portion 365.

With the configuration, the input shaft 320 could be stably supported while shortening as much as possible the length in the axis line direction of the reduction gear mechanism 310A.

In the present embodiment, as described above, the input shaft 320 is integrally formed with the motor shaft 220 by a single shaft.

The single shaft has the end on the input shaft side, which faces the reduced-rotation output member 360, supported by the input shaft bearing member 325, the end on the motor shaft side, which is opposite the end on the input shaft side, supported by a motor shaft bearing member 225 arranged in the motor housing main body 240A, and the intermediate portion supported by the motor-side port block 250A, as shown in Fig. 3.

The gear housing 370 is coupled to the motor housing 230A so as to support the reduced-rotation output member 360 with the distal end of the output shaft portion 363 projecting outward and to accommodate the reduction gear mechanism 310A.

In the present embodiment, the gear housing 370 includes a gear housing main body 380, and a hollow member 390 sandwiched by the gear housing main body 380 and the motor housing 230A, as shown in Fig. 3 and Fig. 4.

The hollow member 390 has the inner teeth 351 arranged on the inner peripheral surface. That is, the hollow member 390 acts as the inner teeth member 350 in the present embodiment.

In the present embodiment, the motor shaft 220 has the output end passing through the motor-side port block 250A and extending outward, as shown in Fig. 3 and Fig. 4.

The gear housing 370 is coupled to the motor-side port block 250A so as to surround the output end of the motor shaft 220.

The hollow member 390 has the opposing end-face facing the motor housing 230A and the end-face on the side opposite the opposing end-face, both end-faces being opened.

The gear housing main body 380 is configured so that its opposing end-face that faces the hollow member 390 is opened and its end-face that is on the side opposite the opposing end-face is blocked.

The gear housing 370 supports the reduced-rotation output member 360 in a freely rotatable manner about the reference axis line RL.

Specifically, the reduction unit 300A is provided with first and second bearing members 301, 302 for bearing supporting the reduced-rotation output member 360.

As shown in Fig. 3 and Fig. 4, the first and second bearing members 301, 302 respectively support the flange portion 361 and the output shaft portion 363 of the reduced-rotation output member 360.

The first bearing member 301 is preferably configured so as to support the reduced-rotation output member 360 and to align the gear housing main body 380 and the hollow member 390.

Specifically, as shown in Fig. 3, the first bearing member 301 includes an inner ring body 301 a inserted into a concave portion formed in the outer peripheral surface of the reduced-rotation output member 360, an outer ring body 301b inserted into a concave portion formed across the inner peripheral surface of the gear housing main body 380 and the inner peripheral surface of the hollow member 390, and a rolling element 301c arranged between the inner ring body 301a and the outer ring body 301b.

More preferably, the first bearing member 301 is arranged so that at least one part thereof overlaps the input shaft bearing member 325 in regards to the position in the axis line direction of the input shaft 320 (see Fig. 3 and Fig. 4), whereby the input shaft 320 and the reduced-rotation output member 360 are more stably supported.

In the present embodiment, the gear housing 370 has the inner space capable of storing fluid, and the stored fluid acts as the lubricating fluid for the reduction gear mechanism 310A.

In such a configuration where the gear housing 370 is capable of storing the fluid, the reduced-rotation output member 360 is preferably formed with a lubricating fluid passage 460 having a first end which opens to the outer peripheral surface within the internal space of the gear housing 370 and a second end which opens to the concave portion 365, as shown in Fig. 4.

By providing the fluid passage 460, the lubricating fluid could be efficiently supplied to the input shaft bearing member 325 and the eccentric members 330a, 330b as well as the outer teeth members 340a, 340b.

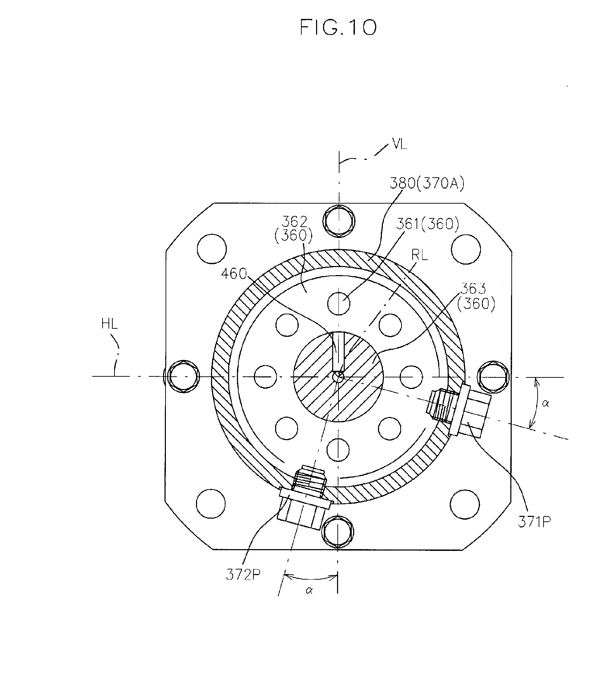

Fig. 10 shows a cross sectional view taken along line X-X in Fig. 4.

As shown in Fig. 10, the gear housing 370 is formed with a first fluid port 371P for communicating the internal space and the outside.

Preferably, the first fluid port 37 1 P is arranged at a position overlapping, when seen from side view, a portion (hereinafter referred to as fluid flow-in portion) of the reduced-rotation output member 360 where the first end of the fluid passage 460 is positioned with a state in which the wheel motor device 100A is mounted to the vehicle frame 30 as a reference.

In such configuration, by using the first fluid port 371P as a fluid feeding port for feeding the fluid into the gear housing 370, it is possible to flow the stored fluid into the fluid passage 460 while reducing as much as possible the stirring resistance of the reduction gear mechanism 310A due to the stored fluid within the gear housing 370.

That is, since only a part of the reduced-rotation output member 360 is immersed within the stored fluid according to the above configuration, the stirring resistance of the reduction gear mechanism 310A could be reduced compared to that of a case where the gear housing 370 is filled with stored fluid.

Further, according to the configuration, the first end of the fluid passage 460 is immersed within the stored fluid when the reduced-rotation output member 360 rotates about the axis line. That is, the stored fluid flows into the fluid passage 460 according to the rotation of the reduced-rotation output member 360 about the axis line, so that the supply of lubricating fluid into the reduction gear mechanism 310A is efficiently maintained.

More preferably, the gear housing 370 is formed with a second fluid port 372P positioned below the first fluid port 371P with a state in which the wheel motor device 100A is mounted to the vehicle frame 30 as a reference, as shown in Fig. 10.

In such configuration, the second fluid port 372P is used as the fluid flow-in port and the first fluid port 371P is used as the fluid flow-out port, so that the fluid level of the stored fluid is maintained at a desired position described above while preventing the stored fluid from accumulating within the gear housing 370.

A mounting state of the wheel motor device 100A to the vehicle frame 30 will now be described.

As shown in Fig. 2 and Fig. 3, the wheel motor device 100A has an attachment portion 110 for attaching the wheel motor device 100A to the vehicle frame 30, the attachment portion 110 being arranged on the end (hereinafter referred to as inner end in the vehicle width direction) on the side opposite the side where the output shaft portion 363 of the reduced-rotation output member 360 is projected.

As described above, the motor-side port block 250A is positioned between the motor housing main body 240A and the gear housing 370 in the present embodiment.

That is, the blocked end-face 243 of the motor housing main body 240A forms the inner end in the vehicle width direction in the present embodiment, and thus the attachment portion 110 is provided at the blocked end-face 243.

Specifically, the blocked end-face 243 is formed with a flange portion extending outward in the radial direction, and the flange portion is formed with an attachment hole or an attachment slit acting as the attachment portion 110, as shown in Fig. 2 and Fig. 3.

By providing the attachment portion 110 on the inner end in the vehicle width direction in the wheel motor device 100A as described above, the vehicle frame 30 and the driving wheel 60 could be spaced apart as much as possible (see Fig. 2).

Further, according to the configuration, the first and second fluid ports 371P, 372P as well as the motor-side operation fluid ports 420P are positioned outward in the vehicle width direction from the vehicle frame 30. Therefore, the piping work for connecting conduits to the fluid ports could be easily performed.

The attachment portion 110 is preferably configured so that the wheel motor device 100A can be mounted to the vehicle frame 30 at a plurality of positions around the reference axis line RL.

That is, the attachment portion 110 allows the wheel motor device 100A to be mounted to the vehicle frame at least a first position about the reference axis line RL and a second position displaced from the first position about the reference axis line RL.

According to the configuration, the direction of the motor-side operation fluid ports 420P and the first and second fluid ports 371P, 372P arranged in the wheel motor device 100A can be changed, and thus the conduits to be connected to such fluid ports are efficiently arranged.

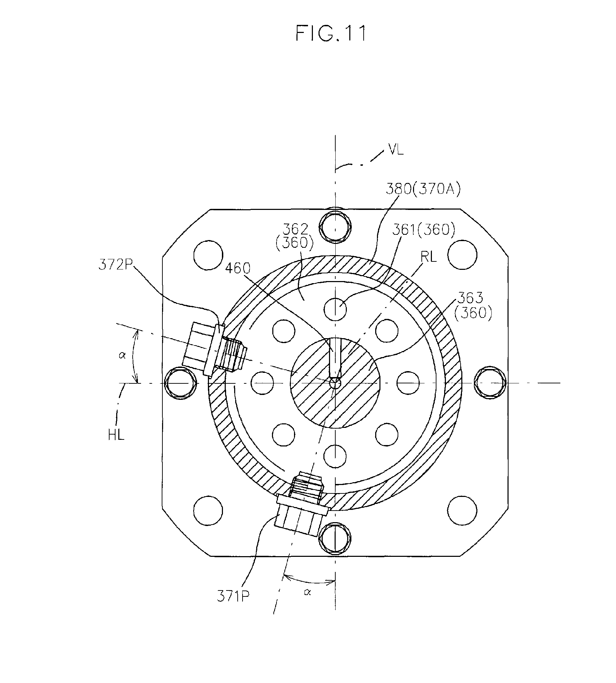

More preferably, when the wheel motor device 100A is mounted to the vehicle frame 30 at the second position about the reference axis line RL (see Fig. 11), the second fluid port 372P overlaps, when seen from side view, the portion where the fluid flow-in portion of the reduced-rotation output member 360 is positioned, and the first fluid port 371P is positioned below the second fluid port 372P; and the position in the up and down direction of the first fluid port 371P (see Fig. 10) in a case where the wheel motor device 100A is positioned at the first position, and the position in the up and down direction of the second fluid port 372P (see Fig. 11) in a case where the wheel motor device 100A is positioned at the second position are displaced in the up and down direction with the reference axis line RL as the reference.

According to such configuration, the fluid level position of the stored fluid within the gear housing 370 could be readily changed by simply changing the attachment position of the wheel motor device 100A to the vehicle frame 30.

For instance, if the flow of fluid flowing into the fluid passage 460 is insufficient at the fluid level position shown in Fig. 10, the fluid flow-in amount to the fluid passage 460 can be increased by attaching the wheel motor device 100A to the vehicle frame 30 at the second position shown in Fig. 11.

In the present embodiment, the attachment portion 110 of the wheel motor device 100A includes four attachment holes or attachment slits that are arranged by 90 degrees apart from one to another around the reference axis line RL, whereby the wheel motor device 100A is mounted to the vehicle frame 30 at positions that are displaced by 90 degrees about the reference axis line RL.

In such configuration, for example, the first fluid port 371P and the second fluid port 372P may be arranged at positions displaced by the same angle α about the reference axis line RL from the virtual horizontal line HL and the virtual vertical line VL, respectively, the virtual horizontal line HL and the virtual vertical line VL passing the reference axis line RL in a state where the wheel motor device 100A is positioned at the first position. According to this, the position in the up and down direction (see Fig. 10) of the first fluid port 371P in a state where the wheel motor device 100A is positioned in the first position and the position in the up and down direction (see Fig. 11) of the second fluid port 372P in a state where the wheel motor device 100A is positioned in the second position could be made different.

Further, the wheel motor device 100A according to the present embodiment is configured so as to change the relative position of the motor-side operation fluid ports 420P and the first and second fluid ports 371P, 372P, in addition to the above configuration.

Specifically, the wheel motor device 100A is configured so as to change the relative position of the motor-side port block 250A and the swash plate 260 about the reference axis line RL while fixing the relative position of the gear housing 370 and the motor housing main body 240A about the reference axis line RL.

According to such configuration, the direction of the motor-side operation fluid ports 420P may be changed as shown in (a) to (d) of Fig. 12A and Fig. 12B while fixing the positions of the first and second fluid ports 371P, 372P, for example, at the position shown in Fig. 10.

Therefore, the conduit to be connected to the first and second fluid ports 371P, 372P and the conduit to be connected to the motor-side operation fluid port 420P are each suitably arranged.

HL and VL in Fig. 12A and Fig. 12B refers to the virtual horizontal line and the virtual vertical line, respectively.

The configuration for allowing the relative position between the first and second fluid ports 371P, 372P and the motor-side operation fluid port 420P to be changed is not limited to the above configuration.

For instance, the gear housing main body 380 formed with the first and second fluid ports 371P, 372P may be coupled to the hollow member 390 at different positions around the reference axis line RL.

Further, the gear housing 370 may be coupled to the motor housing 230A at different positions around the reference axis line RL.

In the present embodiment, the attachment portion 110 is arranged on the inner end in the vehicle width direction of the wheel motor device 100A, as described above, but the present invention is obviously not limited thereto.

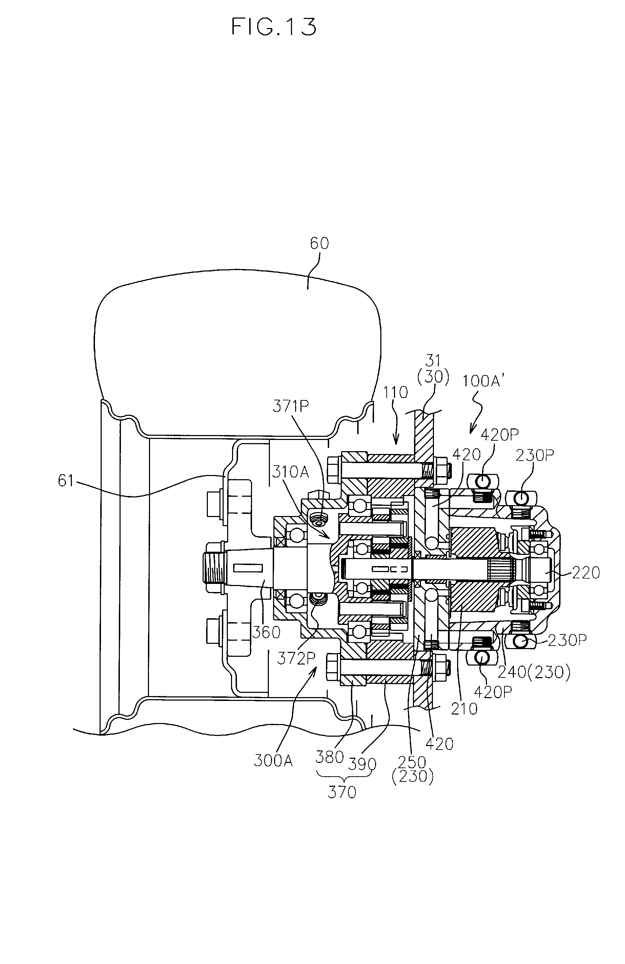

Fig. 13 shows a cross sectional view of the wheel motor device 100A' in which the attachment portion 110 is arranged between the inner end and the outer end in the vehicle width direction.

In such configuration where the attachment portion 110 is arranged at an intermediate region of the wheel motor device 100A with respect to the vehicle width direction, the operation fluid conduit 410 is positioned inward in the vehicle width direction from the vehicle frame 30, thereby effectively preventing the operation fluid conduit 410 from contacting the outside and damaging etc. during vehicle travel.

In the configuration shown in Fig. 13, the motor-side operation fluid passages 420 has first ends fluidly connected to the hydraulic motor main body 210 and second ends opened to the outer surface of the motor housing main body 240A to prevent the motor-side operation fluid ports 420P from interfering with the vehicle frame 30.

### Second Embodiment

Another embodiment of the wheel motor device according to the present invention will now be described with reference to the accompanied drawings.

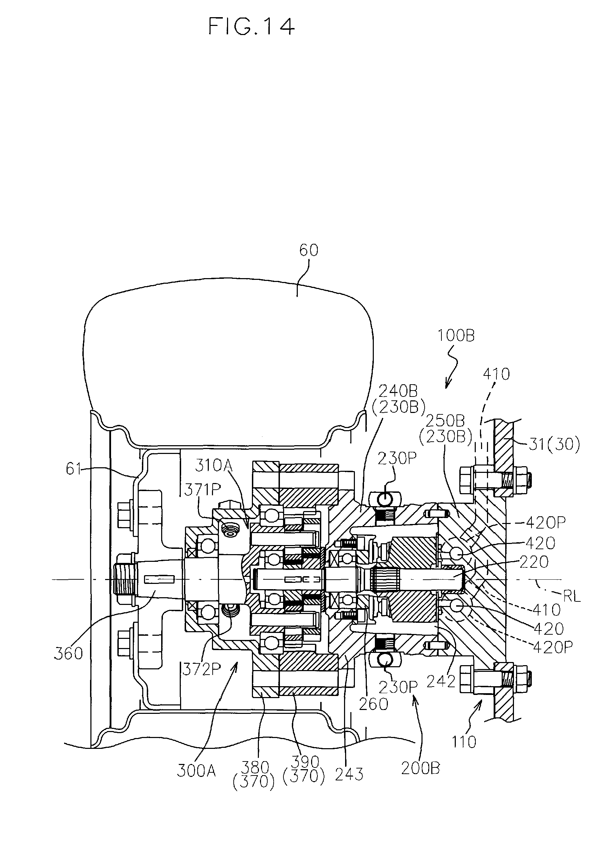

Fig. 14 is a cross sectional view of a wheel motor device 100B according to the present embodiment applied to the left side driving wheel 60 in the working vehicle 1A, the cross sectional view showing a cross section displaced 45 degrees from the vertical plane.

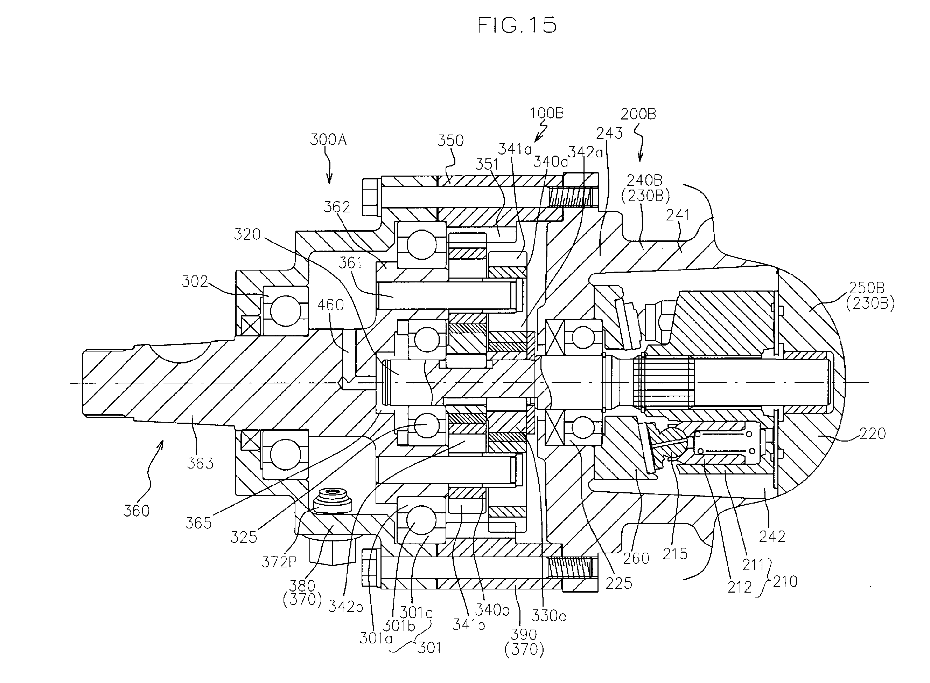

Fig. 15 shows a vertical cross sectional view of the wheel motor device 100B.

The same reference characters are denoted for the members same as in the first embodiment, and thus the detailed description thereof is omitted.

The motor-side port block 250A is sandwiched between the motor housing main body 240A and the gear housing 370 in the first embodiment, whereas a motor housing main body 240B is positioned between a motor-side port block 250B and the gear housing 370 in the wheel motor device 100B according to the present embodiment.

Specifically, the wheel motor device 100B includes a hydraulic motor unit 200B and the reduction gear unit 300A, as shown in Fig. 14 and Fig. 15.

The hydraulic motor unit 200B is the same as the hydraulic motor unit 200A in the first embodiment except for the fact that the motor housing 230A is changed to a motor housing 230B.

That is, the hydraulic motor unit 200B includes the hydraulic motor main body 210, the motor shaft 220, the motor housing 230B accommodating the hydraulic motor main body 210 and supporting the motor shaft 220 in a freely rotatable manner around the reference axis line RL, and the swash plate 260.

As shown in Fig. 14 and Fig. 15, the motor housing 230B includes a motor housing main body 240B surrounding the hydraulic motor main body 210, and a motor-side port block 250B removably connected to the motor housing main body 240B.

The motor housing main body 240B has an end, which faces inward in the vehicle width direction, formed with an opening 242 through which the hydraulic motor main body 210 is inserted, and an end, which faces outward in the vehicle width direction, formed as the blocked end-face 243, with the state in which the wheel motor device 100B is mounted to the vehicle frame 30 as the reference.

The motor-side port block 250B is removably coupled to the motor housing main body 240B so as to block the opening 242.

As shown in Fig. 14, the attachment portion 110 is arranged on the motor-side port block 250B positioned the most inward in the vehicle width direction.

The reduction unit 300A is removably coupled to the blocked end-face 243.

Therefore, in the present embodiment, the motor shaft 220 is supported by the blocked end-face 243 and the motor-side port block 250B in a freely rotatable manner about the reference axis line RL with a first end forming the output end passing through the blocked end-face 243 of the motor housing main body 240B and extending outward, and a second end opposite the first end terminating in the motor-side port block 250B.

The same effects as in the first embodiment are obtained in the wheel motor device 100B.

The attachment portion 110 is arranged on the inner end in the vehicle width direction (see Fig. 14) in the present embodiment, but the attachment portion may be arranged between the inner end and the outer end in the vehicle width direction of the wheel motor device.

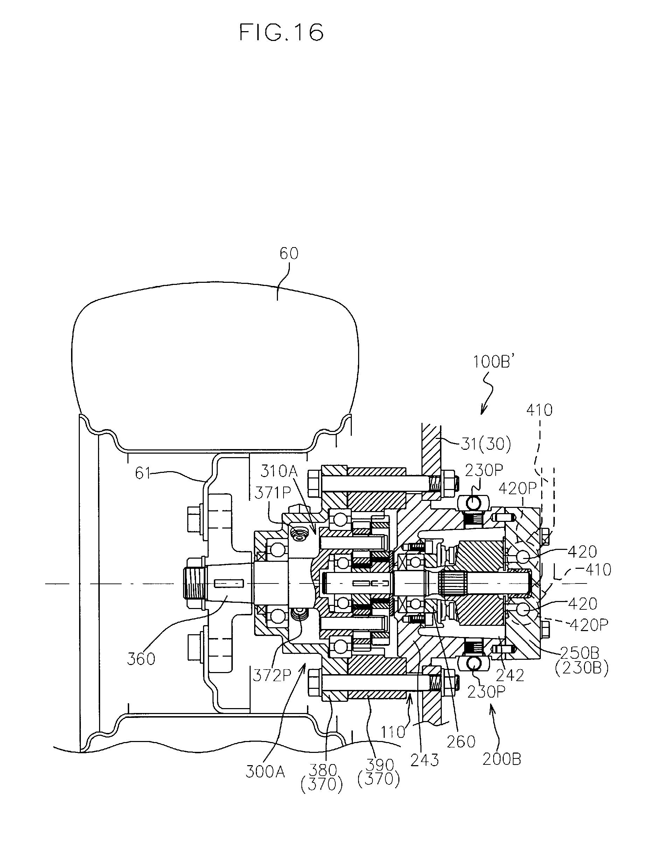

Fig. 16 is a cross sectional view of the wheel motor device 100B' in which the attachment portion is arranged between the inner end and the outer end in the vehicle width direction.

In the modified embodiment shown in Fig. 16, the blocked end-face 243 of the motor housing main body 240B is integrally formed with the flange portion extending outward in the radial direction, and the attachment portion 110 is arranged on the flange portion.

According to the modified configuration, the operation fluid conduits 410 are effectively prevented from contacting the outside and damaging etc. during the vehicle travel, similar to the configuration of Fig. 13 in the first embodiment.

### Third Embodiment

Still another embodiment of the wheel motor device according to the present invention will now be described with reference to the accompanied drawings.

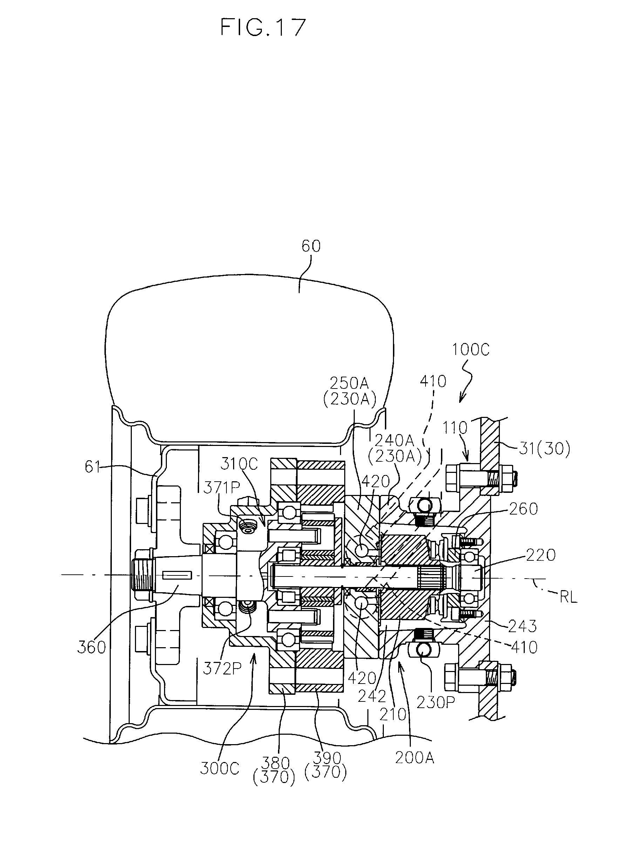

Fig. 17 is a cross sectional view of a wheel motor device 100C according to the present embodiment applied to the left side driving wheel 60 in the working vehicle 1A, the cross sectional view showing a cross section displaced 45 degrees from the vertical plane.

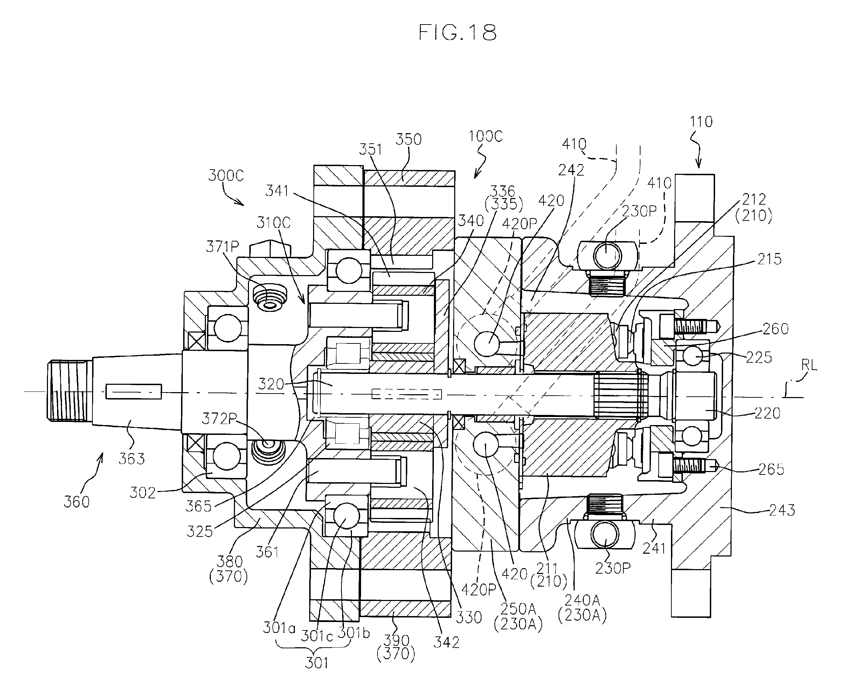

Fig. 18 shows an enlarged view of Fig. 17.

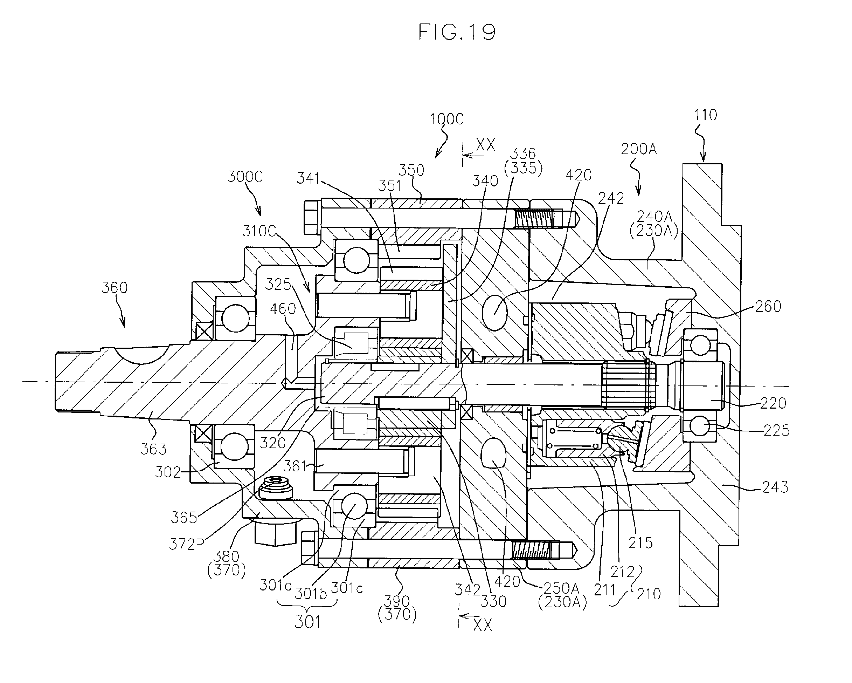

Fig. 19 shows a vertical cross sectional view of the wheel motor device 100C.

The same reference characters are denoted for the members same as in the first or second embodiment, and thus the detailed description thereof is omitted.

The wheel motor device 100C according to the present embodiment is modified to have the single eccentric member 330 and the single outer teeth member 340 with respect to the wheel motor device 100A according to the first embodiment, and further includes a balance weight 335 for reducing or lowering the eccentric moment caused by the single eccentric member 330.

Specifically, as shown in Figs. 17 to 19, the wheel motor device 100C includes the hydraulic motor unit 200A, and a reduction unit 300C removably connected to the hydraulic motor unit 200A, the reduction unit 300C reducing speed of the rotational power from the hydraulic motor unit 200A and transmitting the result to the corresponding driving wheel.

The reduction unit 300C includes a reduction gear mechanism 310C for reducing speed of the rotational power of the motor shaft 220, and the gear housing 370 removably coupled to the motor housing 230A so as to accommodate the reduction gear mechanism 300C.

The reduction gear mechanism 300C includes the balance weight 335, in addition to the input shaft 320, the single eccentric member 330, the outer teeth member 340, the inner teeth member 350 and the reduced-rotation output member 360.

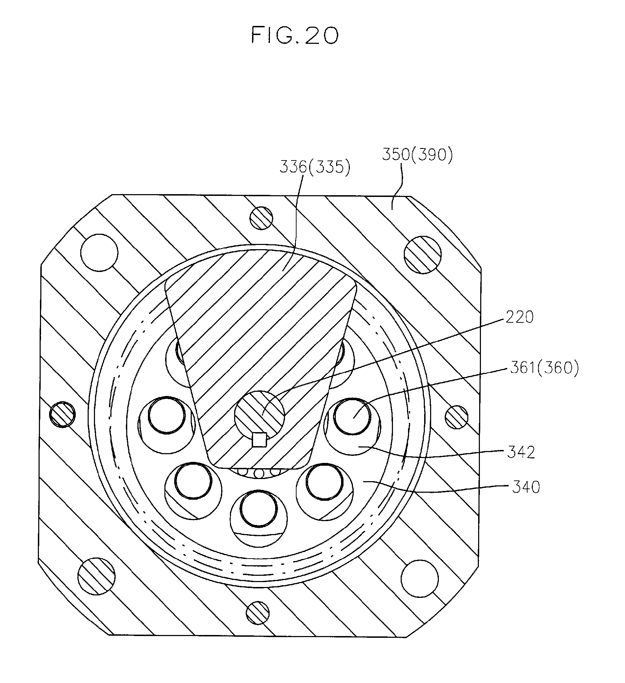

Fig. 20 shows a cross sectional view taken along line XX-XX of Fig. 19.

As shown in Fig. 18 to Fig. 20, the balance weight 335 includes a weight portion 336, and is supported by the input shaft 320 in a relatively non-rotatable manner so that the weight part 336 extends in the direction opposite the eccentric direction of the eccentric member 330 with respect to the reference axis line RL.

By providing the balance weight 335, the eccentric moment caused by the rotation of the single eccentric member 330 and the single outer teeth member 340 is lowered or reduced, even though the reduction gear mechanism 310C has only one eccentric member 330 and only one outer teeth member 340.

Therefore, the rotation of the input shaft 320 about the reference axis line is stabilized while reducing the number of components.

The same effects as in the first embodiment are obtained in the wheel motor device 100C.

The attachment portion is arranged on the inner end in the vehicle width direction (see Fig. 17) in the present embodiment, but the attachment portion 110 may be arranged between the inner end and the outer end in the vehicle width direction of the wheel motor device 100C' (see Fig .21).

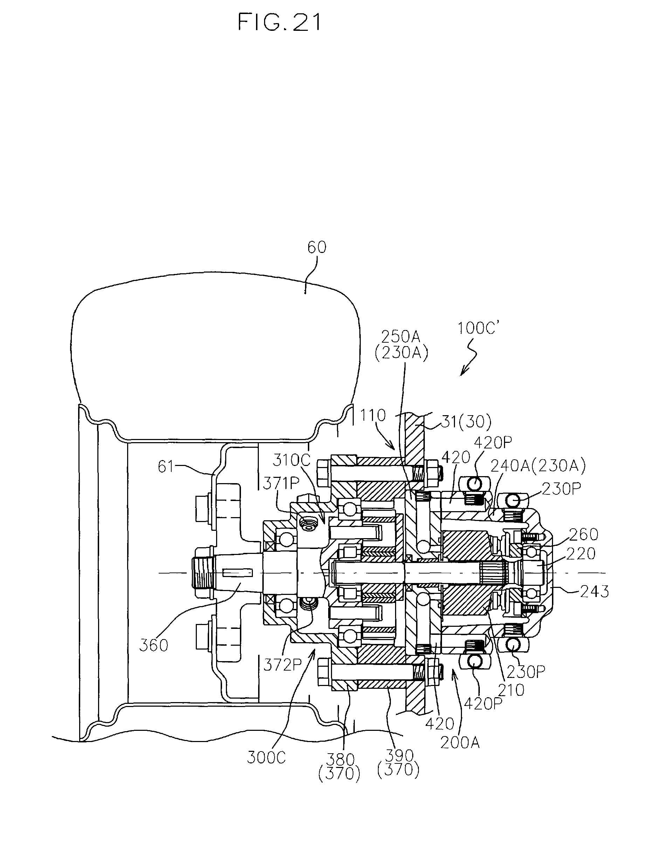

In the modified embodiment shown in Fig. 21, a coupling structure for coupling the hollow member 390 and the gear housing main body 380 is commonly used as the attachment portion 110.

More specifically, the wheel motor device 100C' is mounted to the vehicle frame 30 using a fastening member such as a bolt for fastening the hollow member 390 and the gear housing main body 380.

According to the modified embodiment where the attachment portion 110 is arranged between the inner end and the outer end in the vehicle width direction of the wheel motor device 100C', the operation fluid conduits 410 could be effectively prevented from contacting the outside and damaging etc. during vehicle travel.

### Fourth Embodiment

Still another embodiment of the wheel motor device according to the present invention will now be described with reference to the accompanied drawings.

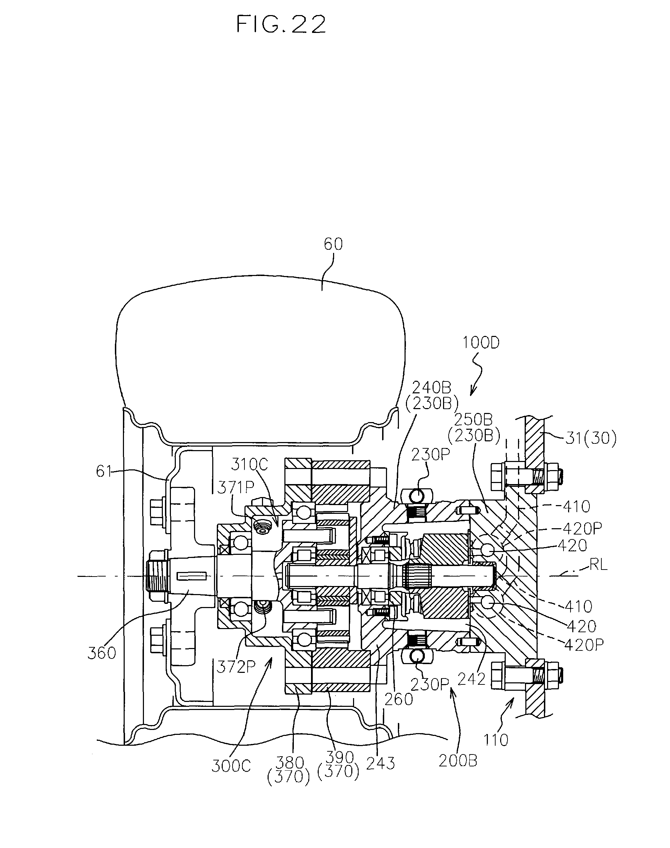

Fig. 22 is a cross sectional view of a wheel motor device 100D according to the present embodiment applied to the left side driving wheel 60 in the working vehicle 1A, the cross sectional view showing a cross section displaced 45 degrees from the vertical plane.

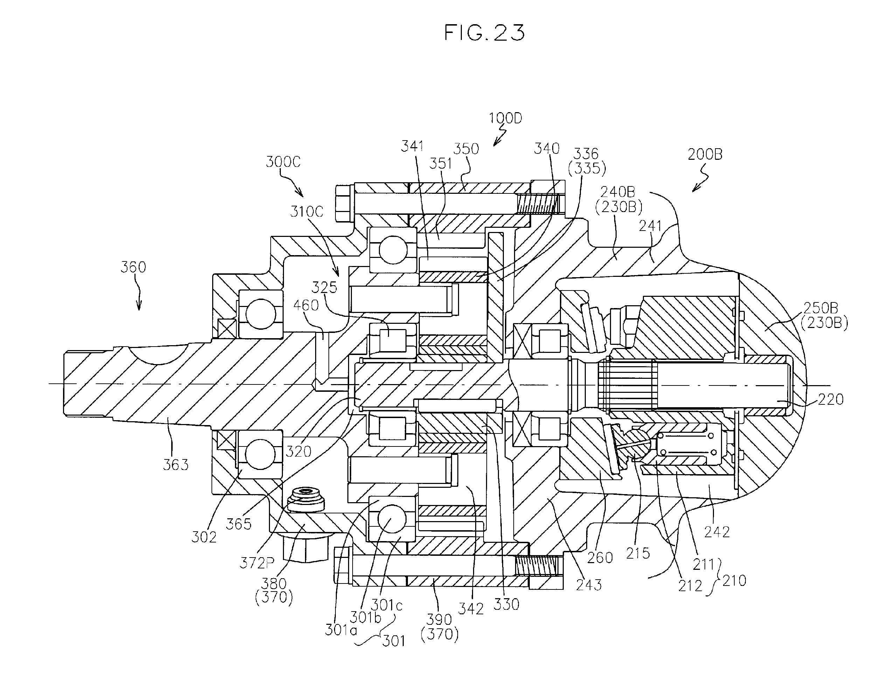

Fig. 23 shows a vertical cross sectional view of the wheel motor device 100D.

The same reference characters are denoted for the members same as in each of the above embodiments, and thus the detailed description thereof is omitted.

As shown in Fig. 22 and Fig. 23, the wheel motor device 100D according to the present embodiment is modified to have the only one eccentric member 330 and the only one outer teeth member 340 with respect to the wheel motor device 100B according to the second embodiment, and further includes the balance weight 335 for reducing or lowering the eccentric moment caused by the single eccentric member 330.

The same effects as in each of the above embodiments are also obtained in the wheel motor device 100D.

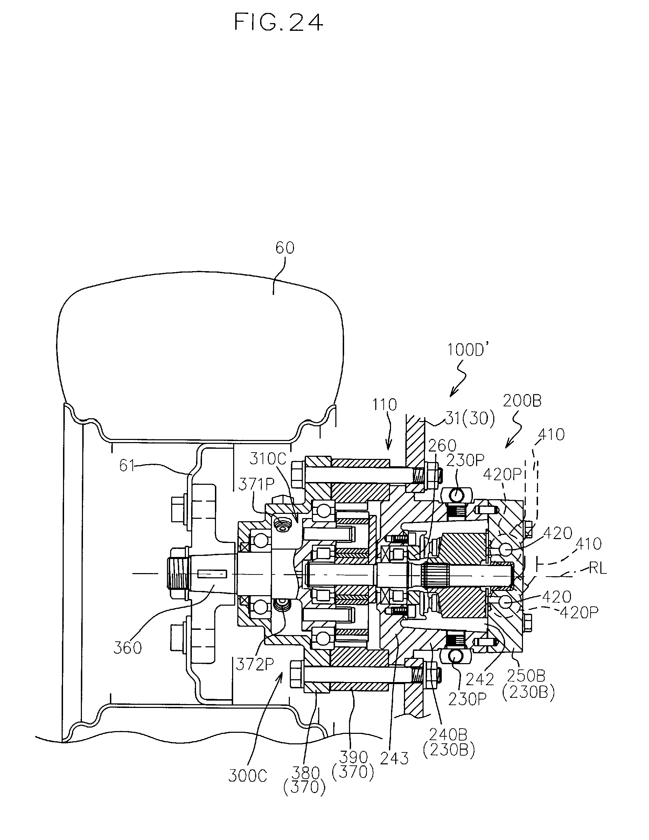

As shown in Fig. 24, the attachment portion 110 may obviously be arranged between the inner end and the outer end in the vehicle width direction in the wheel motor device according to the present embodiment.

### Fifth Embodiment

Still another embodiment of the wheel motor device according to the present invention will now be described with reference to the accompanied drawings.

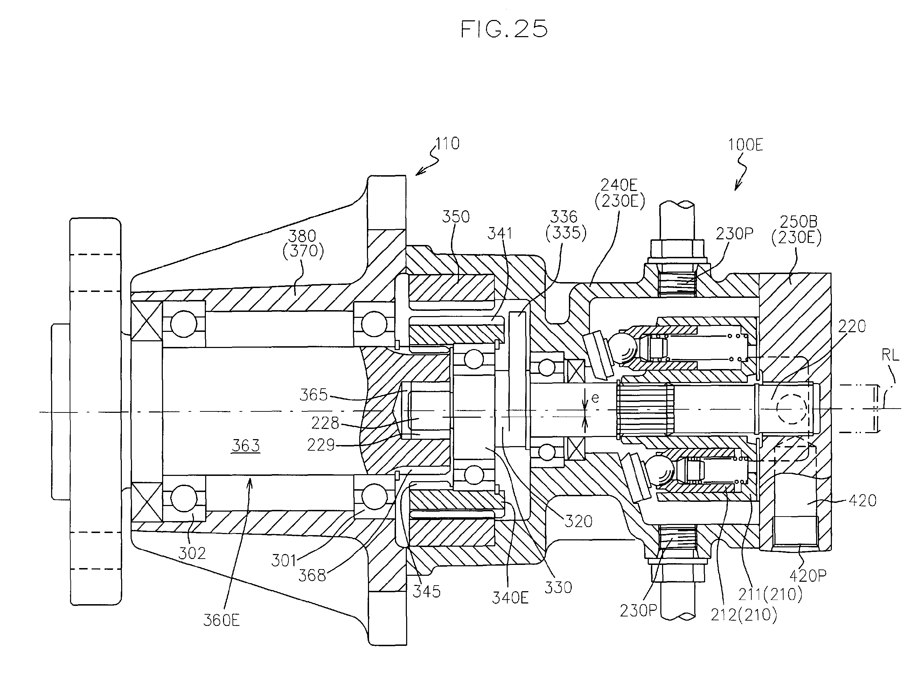

Fig. 25 is a cross sectional view of a wheel motor device 100E according to the present embodiment.

The same reference characters are denoted for the members same as in each of the above embodiments, and thus the detailed description thereof is omitted.

In the first to fourth embodiments, as described above, the reduced-rotation output member 360 includes, in addition to the output shaft portion 363 that rotates about the reference axis line RL, the flange portion 362 that rotates about the reference axis line RL along with the output shaft 363 and the carrier pin 361 supported by the flange portion 362, the carrier pin 361 being inserted into the cam hole 342 formed in the outer teeth member 340.

That is, in each of the above embodiments, the cam hole 342, the carrier pin 361 and the flange portion 362 form a rotation-component retrieving mechanism for retrieving the rotation-component around the reference axis line RL from the outer teeth member 340.

In the present embodiment, on the other hand, the rotation-component retrieving mechanism different from that of each above embodiments is provided.

Specifically, the wheel motor device 100E according to the present embodiment includes an outer teeth member 330E in place of the outer teeth member 330, and a reduced-rotation output member 360E in place of the reduced-rotation output member 360.

As shown in Fig. 25, an example of including the outer teeth member 340E and the reduced-rotation output member 360E respectively in place of the outer teeth member 340 and the reduced-rotation output member 360 in the wheel motor device substantially the same as the wheel motor device 100D' shown in Fig. 24 is described in the present embodiment, but of course, the outer teeth member 340E and the reduced-rotation output member 360E may be arranged in various configurations of the wheel motor devices described in the above embodiments.

The outer teeth member 340E is the same as the outer teeth member 340 in being externally inserted in a relatively rotatable manner around the eccentric member 330 and including the outer teeth 341 of teeth number Z1 on the outer peripheral surface, but differs from the outer teeth member 340 in including the inner teeth 345 of teeth number Z3 on the inner peripheral surface instead of the cam hole 342.

The reduced-rotation output member 360E is the same as the reduced-rotation output member 360 in including the output shaft portion 363 that rotates about the reference axis line RL, but differs from the reduced-rotation output member 360 in including an outer teeth 368 arranged on the outer peripheral surface of the output shaft portion 363 so as to engage with the inner teeth 345 instead of the flange portion 362 and the carrier pin 361.

The teeth number Z4 of the outer teeth 368 of the reduced-rotation output member 360E is less than the teeth number Z3 of the inner teeth 345 of the outer teeth member 340E.

In the wheel motor device 100E according to the configuration, the inner teeth 345 of the outer teeth member 340E and the outer teeth 368 of the reduced-rotation output member 360E form the rotation-component retrieving mechanism for retrieving the rotation-component around the reference axis line RL from the outer teeth member 340E.

Preferably, the opposing ends of the reduced-rotation output member 360E and the input shaft 320 are concavo-convex engaged in a relatively rotatable manner state, as shown in Fig. 25.

Specifically, a concave portion 365 is formed in an opposing end (end of the reduced-rotation output member 360E in the illustrated figure) of one of the reduced-rotation output member 360E or the input shaft 320, and a convex portion 228 to be inserted into the concave portion 365 is formed in an opposing end (end of the input shaft 320 in the illustrated figure) of the other of the reduced- rotation output member 360E or the input shaft 320, and a bearing member 229 such as a bush and the like is interposed between the convex portion 228 and the concave portion 365.

According to such configuration, the rotation of the input shaft 220 and the reduced-rotation output member 360E about the reference axis line RL could be stabilized.

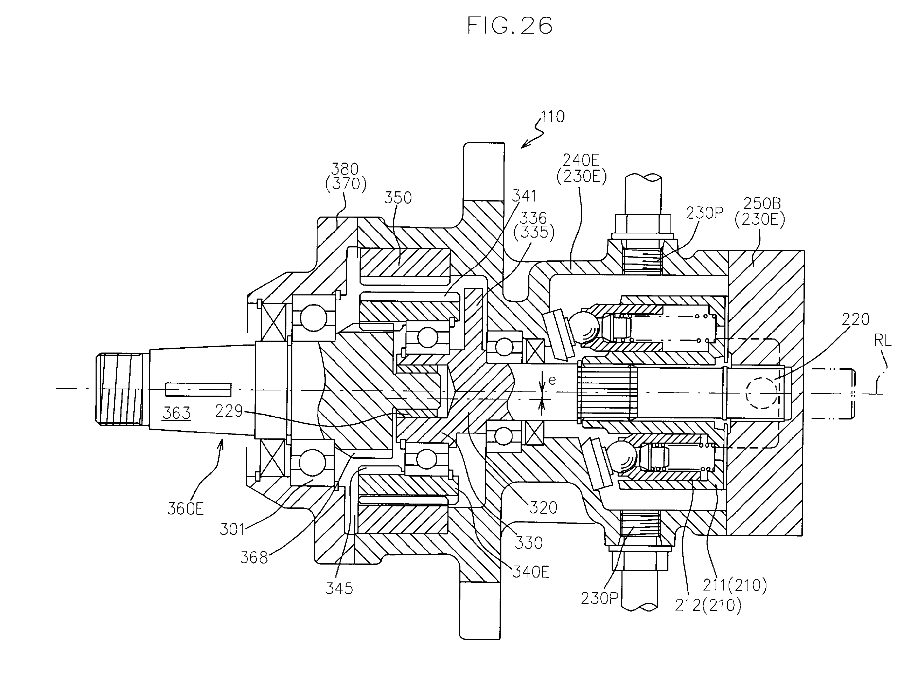

The reduced-rotation output member 360E is supported by the gear housing main body 380 (see Fig. 25) by way of first and second bearing members 301, 302 spaced apart to each other in the axis line direction in the present embodiment, but only one bearing member 301 may be arranged according to the conditions of the axis line length and the like of the reduced-rotation output member 360E (see Fig. 26).

In each of the above embodiments, the gear housing 370 is configured to include the hollow member 390 in addition to the gear housing main body 380, and the inner teeth 351 is arranged on the inner peripheral surface of the hollow member 390, but the hollow member 390 may be omitted and the motor housing 230E may accommodate the inner teeth member 350 as in the present embodiment.

Specifically, the motor housing 230E includes a motor housing main body 240E and the motor-side port block 250B.

The motor housing main body 240E forms a hydraulic motor accommodating space for accommodating the hydraulic motor main body 210 in cooperation with the motor-side port block 250B, and an inner teeth member accommodating space integrally formed with the hydraulic motor accommodating space.

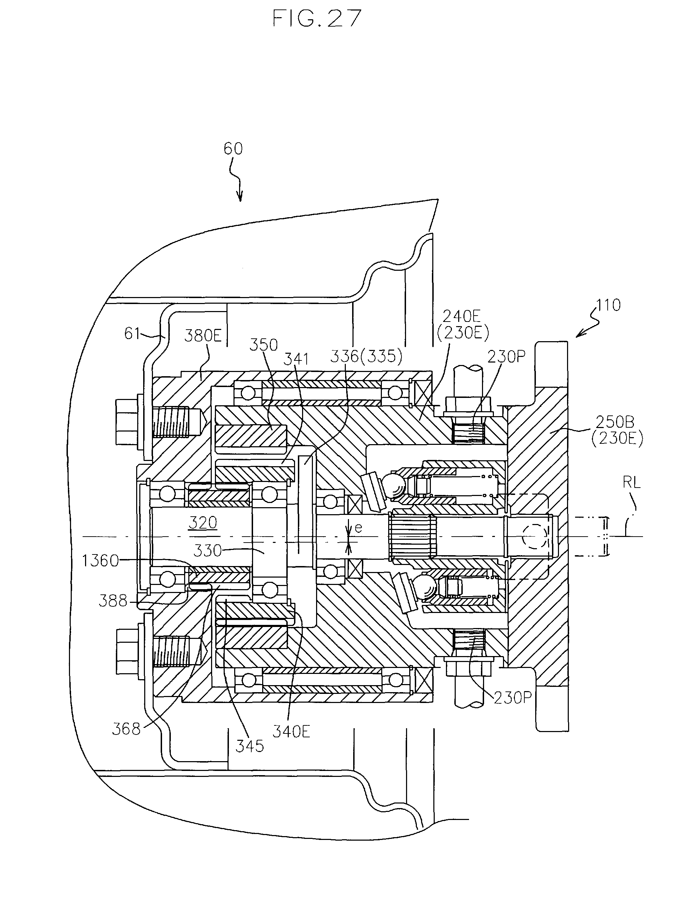

Similar to each of the above embodiments, the reduced-rotation output member 360E is configured so as to include the output shaft portion 363 and the reduced-rotational power is output to the outside via the reduced-rotation output member 360E in the present embodiment, but in place thereof, the reduced-rotational power may be output to the outside via the gear housing main body 380E, as shown in Fig. 27.

Specifically, a gear member 1360 including the outer teeth 368 of teeth number Z4 that engages with the inner teeth 345 of the outer teeth member 340E may be arranged as the reduced-rotation output member, as shown in Fig. 27.

Further, the gear housing main body 380E arranged with an inner teeth 388 of teeth number Z4 that engages with the outer teeth 368 of the gear member 1360 may be provided, in place of the gear housing main body 380.

In such configuration, the gear housing main body 380E is coupled to the wheel 61 of the corresponding driving wheel 60 in a relatively non-rotatable manner.

The gear member is preferably supported by the input shaft in a relatively rotatable manner.

The reduced-rotational power may of course be output to the outside via the gear housing main body 380E in each of the above embodiments, as shown in Fig. 27.

Each of the above embodiments is configured so that the other end on the side opposite the output end of the motor shaft 220 is terminated in the motor housing 230, but the other end of the motor shaft 220 may be outwardly extended as shown in a chain double dashed line in Fig. 25 to Fig. 27.

By outwardly extending the other end of the motor shaft 220 from the motor housing 230, the other end can be used as a braking portion to which a mechanical type braking device is applied.

### Sixth Embodiment

Still another embodiment of the wheel motor device according to the present invention will now be described with reference to the accompanied drawings.

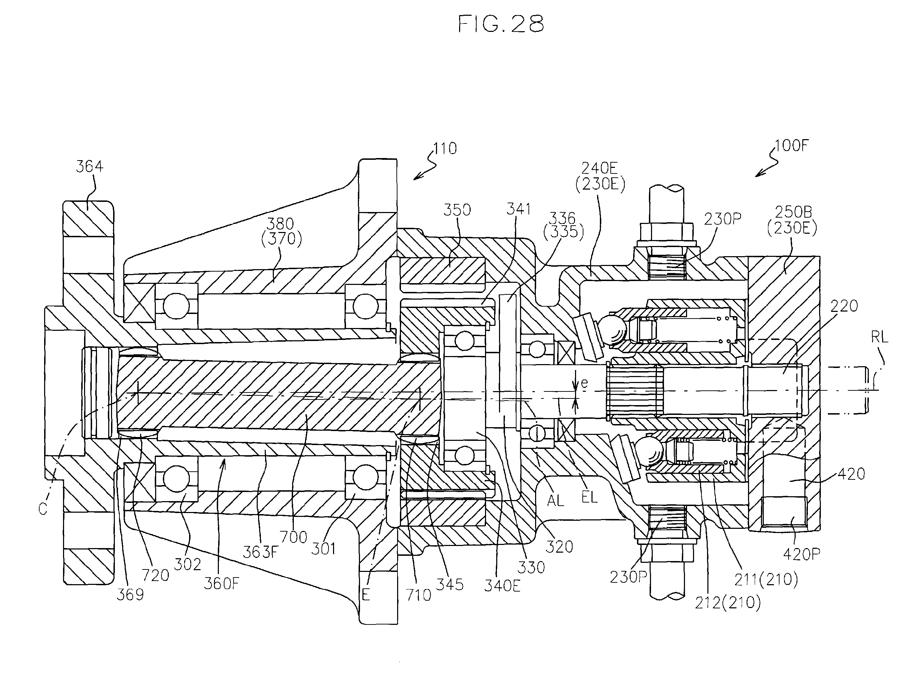

Fig. 28 shows a cross sectional view of a wheel motor device 100F according to the present embodiment.

The same reference characters are denoted for the members same as in each of the above embodiments, and thus the detailed description thereof is omitted.

The wheel motor device 100F includes a rotation-component retrieving mechanism different from that in each of the above embodiments.

Specifically, as shown in Fig. 28, the wheel motor device 100F includes a reduced-rotation output member 360F in place of the reduced-rotation output member 360E in the wheel motor device 100E according to the fifth embodiment, and further includes an oscillating member 700 that operatively connects the outer teeth member 340E and the reduced-rotation output member 360F.

The reduced-rotation output member 360F is supported by the gear housing main body 380 in a freely rotatable manner about the reference axis line RL.

Specifically, the reduced-rotation output member 360F includes a hollow output shaft portion 363F that freely rotates about the reference axis line RL.

The hollow output shaft portion 363F is formed with a spline 369 on the inner peripheral surface.

The oscillating member 700 has a first engaging convex portion 710 at a first end in the axis line direction, the first engaging convex portion 710 engaging with the inner teeth 345 of the outer teeth member 340E, and a second engaging convex portion 720 at a second end in the axis line direction, the second engaging convex portion 720 engaging with the spline 369 of the output shaft portion 363F.

With the rotation of the outer teeth member 340E, the oscillating member 700 of such configuration rotates about its rotation axis line AL while the first end oscillates with an intersecting point C of the reference axis line RL and the rotation axis line AL of the oscillating member 700 as an oscillation center point.

Preferably, the first engaging convex portion 710 may have an outer peripheral surface of circular arc shape with an intersecting point E of the rotation center line EL of the inner teeth 345 of the outer teeth member 340E and the rotation axis line AL as the center point.

The second engaging convex portion 720 may have an outer peripheral surface of circular arc shape with the oscillation scenter point C as the center point.

According to the preferable configuration where the outer peripheral surface of the first and second engaging convex portions 710, 720 are formed to have the circular arc shapes, the engagement relationship between the first engaging convex portion 710 and the inner teeth 345, as well as the engagement relationship between the second engaging convex portion 720 and the spline 369 are satisfactorily maintained irrespective of the posture of the oscillating member 700.

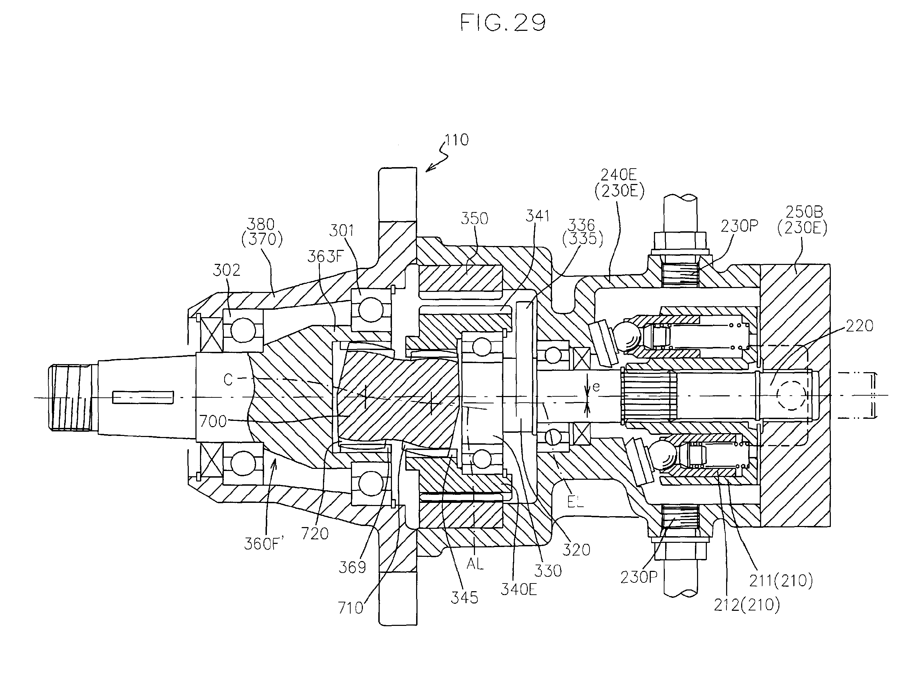

The reduced-rotation output member 360F includes a flange portion 364 on the outer end of the output shaft portion 363F, and the rotational power whose speed is reduced is output to the wheel 61 of the corresponding driving wheel 60 via the flange portion 364 in the present embodiment as shown in Fig. 28, but the rotational power whose speed is reduced may obviously be output from the outer end of the output shaft portion 363F, as shown in Fig. 29.

Further, the rotational power whose speed is reduced may be output to the outside via the gear housing main body 380E in the present embodiment, as shown in Fig. 27.

In each of the above embodiments, an example in which the wheel motor device 100A to 100F according to the present invention is applied to the vehicle 1A in which non-driving wheels 70 are steering wheels steered by the Ackermann steering mechanism has been described, but the present invention may of course be applied to a vehicle of other form.

For instance, the present invention may be applied to a vehicle 1B in which the non-driving wheels are caster wheels 75, which vehicle 1B being configured so as to independently change driving-speed of the pair of driving wheels 60.

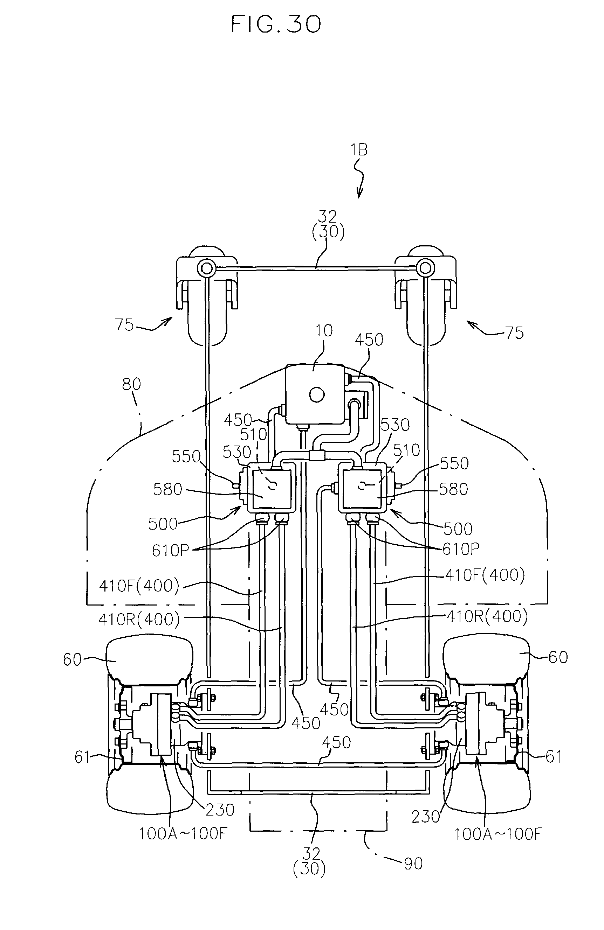

The vehicle 1B includes the pair of hydraulic pump units 500, as shown in Fig. 30.

In the vehicle 1B, the pair of wheel motor devices 100A to 100D are each fluidly connected to the pair of hydraulic pump units 500 by way of the pair of operation fluid lines 400, and the vehicle 1B includes a first HST that independently and reversibly non-stepwise change the driving-speed of one of the pair of driving wheels 60 (e.g., left side driving wheel), and a second HST that independently and reversibly non-stepwise change the driving-speed of the other pair of driving wheels 60 (e.g., right side driving wheel).

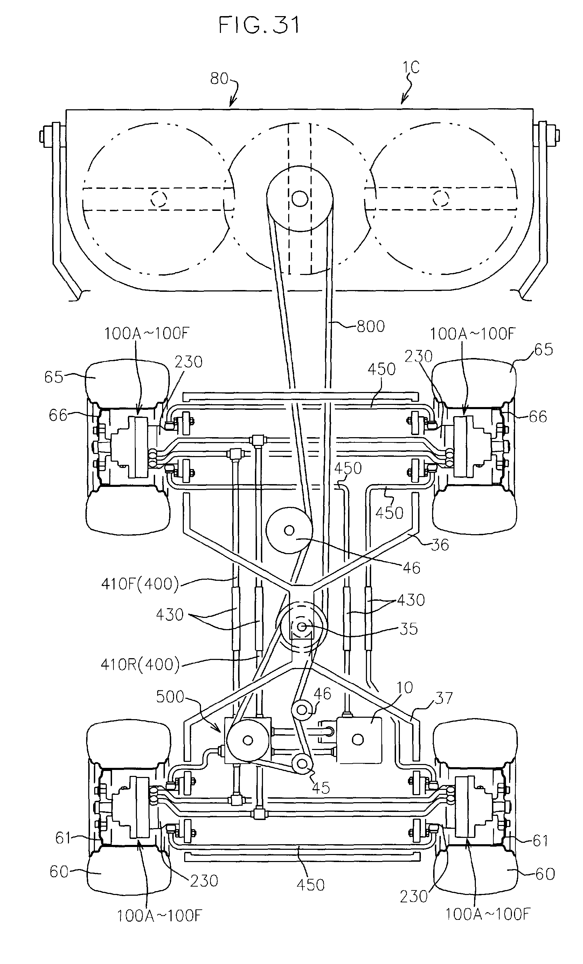

As shown in Fig. 31, in a body-bendable vehicle 1C in which a front frame 36 and a back frame 37 are coupled in a freely oscillating manner by way of a pivot shaft 35 arranged so as to lie in a vertical direction at a central position between the front and back wheels and at a central position between left and right wheels, the wheels 66 of the pair of front side driving wheels 65 supported at the front frame 36 and the wheels 61 of the pair of back side driving wheels 60 supported at the back frame 37 may each be driven by any one of the wheel motor devices 100A to 100F.

In the body-bendable vehicle 1C, the wheel motor device 100A to 100F supported by the frame (front frame 36 in Fig. 31) on the side opposite the frame (back frame 37 in Fig. 31) supporting the hydraulic pump unit 500, and the hydraulic pump unit 500 are fluidly connected by the operation fluid line 400 including an elastic conduit 430 in the middle.

The vehicle 1C shown in Fig. 31 includes a working machine 80 at the front of the vehicle.

Further, reference character 45 in Fig. 31 is an engine pulley, and reference character 46 is a tension pulley. Reference character 800 is a transmitting structure for transmitting engine power to the working machine 80. The transmitting structure 800 includes double PTO output pulleys having the rotating center on the same axis line as the pivot shaft 35, where a first transmission belt for receiving the drive from the engine pulley 45 is wound around one of the pulleys, and a second transmission belt is wound between the other pulley and a working machine input pulley.

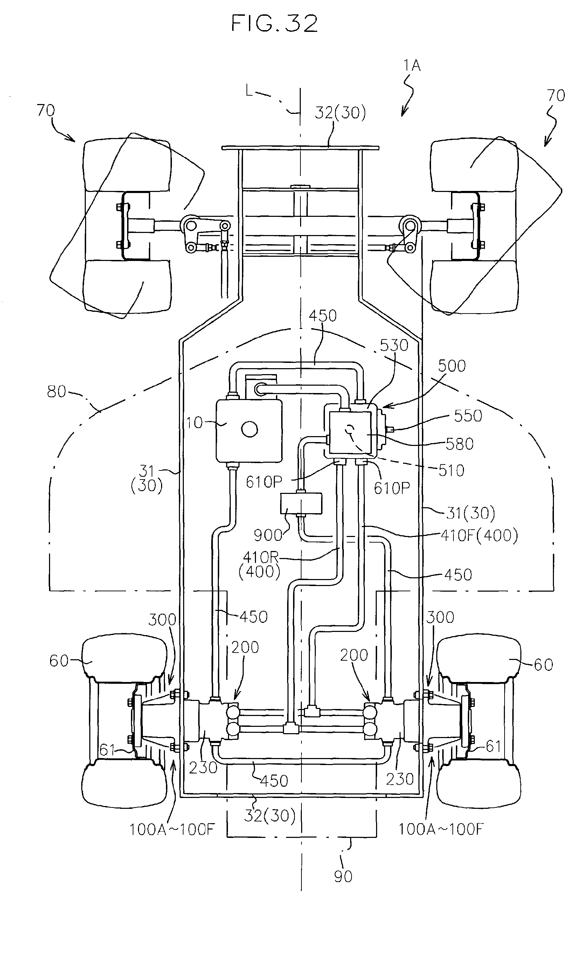

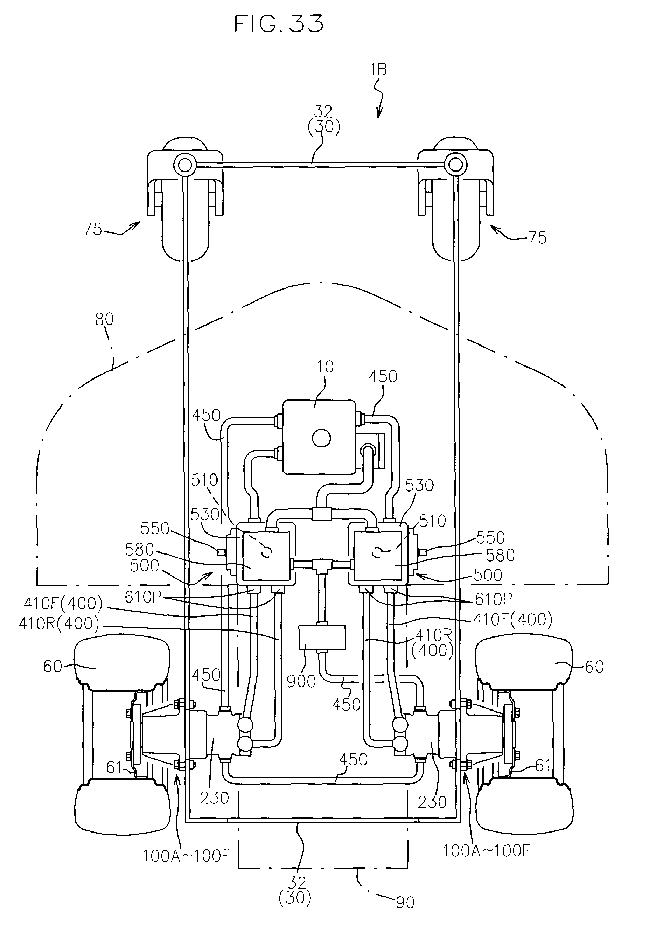

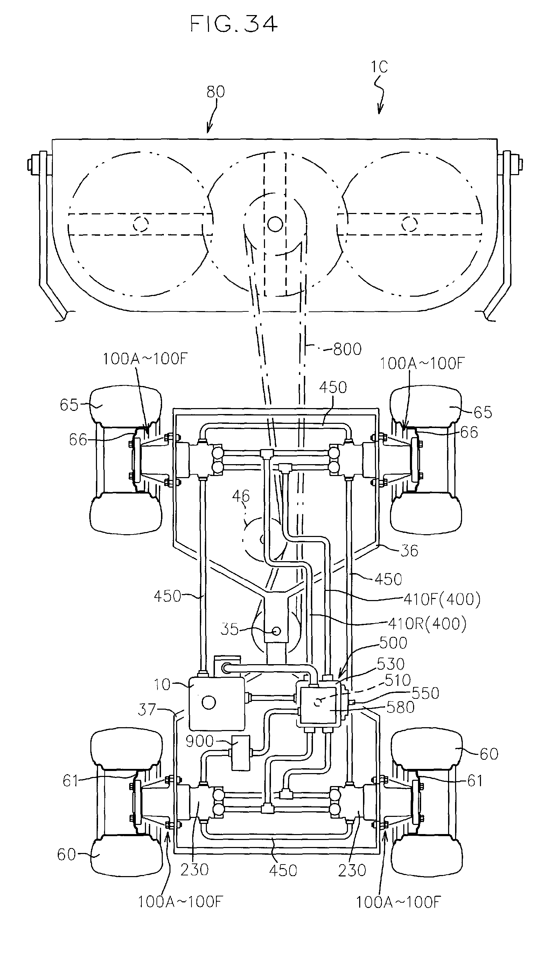

In each of the vehicles 1A to 1C, the inner space of the pump housing 530 and the inner space of the fluid tank 10 are fluidly connected by way of an external conduit 450, and the stored fluid in the fluid reservoir space defined by the pump housing 530 and the fluid tank 10 functions as the fluid source of the charge pump unit 580, as shown in Fig. 1, Fig. 30 and Fig. 31. The inner space of the pump housing 530 and the inner space of the motor housing 230 in one of the pair of wheel motor devices 100, the inner spaces of each motor housing 230 of the pair of wheel motor devices 100, and the inner space of the motor housing 230 in the other pair of wheel motor devices 100 and the inner space of the fluid tank 10 are each fluidly connected by the external conduit 450 to prevent accumulation of fluid in the motor accommodating space. However, in place thereof, the charge relief fluid from the charge pump unit 580 is first cooled by means of an oil cooler 900 instead of being returned into the pump housing 530, and then is returned to the fluid tank 10 through each motor housing 230 in the pair of wheel motor devices 100, as shown in Fig. 32 to Fig. 34.

According to the configuration where at least a part of the pressure fluid from the charge pump unit 580 is supplied to the oil cooler 900, and the fluid, which has been cooled by the oil cooler 900, is returned to the fluid tank 10 after being passed through each motor housing 230 in the pair of wheel motor devices 100, the temperature of the hydraulic motor main body 210 in each of the motor housings 230 is effectively prevented from increasing. Therefore, degradation of transmission efficiency of the HST is effectively suppressed.

Although the hydraulic motor units 200A, 200B are given by way of example as the rotational output unit in each embodiment, an electrical motor unit may obviously be used in place of the hydraulic motor units 200A, 200B.

This specification is by no means intended to restrict the present invention to the preferred embodiments set forth therein. Various modifications to the wheel motor unit may be made by those skilled in the art without departing from the spirit and scope of the present invention as defined in the appended claims.

## Claims

1. A wheel motor device comprising a variable-rotation output unit for outputting rotational power of a variable-rotation output body accommodated in a variable-rotation output body housing via a variable-rotation output shaft rotating about a reference axis line; and a reduction unit including a reduction gear mechanism for reducing rotation speed of the variable-rotation output shaft and a gear housing for accommodating the reduction gear mechanism, wherein
the reduction gear mechanism includes:
an input shaft relatively non-rotatable about the reference axis line with respect to the variable-rotation output shaft;
an eccentric member having a rotating center eccentric from the reference axis line, the eccentric member being relatively non-rotatable with respect to the input shaft;
an outer teeth member supported at the eccentric member in a relatively rotatable manner, the outer teeth member having outer teeth arranged on the outer peripheral surface;
an inner teeth member having an inner diameter greater than an outer diameter of the outer teeth member and fixed in a non-rotatable manner, the inner teeth member having an inner teeth engaging with the outer teeth, the inner teeth having a teeth number different from that of the outer teeth;
a rotation-component retrieving mechanism for retrieving rotation-component around the reference axis line from the outer teeth member; and
a reduced-rotation output member rotatably driven about the reference axis line by the rotation-component retrieving mechanism.

2. A wheel motor device according to claim 1, wherein
the gear housing includes a gear housing main body that is rotatable around the reference axis line relative to the variable-rotation output body housing; and
the reduced-rotation output member is connected to the gear housing main body in a relatively non-rotatable manner.

3. A wheel motor device according to claim 1, wherein
the reduced-rotation output member includes an output shaft portion, at least part of the output shaft portion being projected outward of the gear housing.

4. A wheel motor device according to any one of claims 1 to 3, wherein
the rotation-component retrieving mechanism includes an inner teeth arranged at the outer teeth member and an outer teeth arranged at an outer peripheral surface of the reduced-rotation output member so as to engage with the inner teeth.

5. A wheel motor device according to any one of claims 1 to 3, wherein
the rotation-component retrieving mechanism includes an inner teeth arranged at the outer teeth member, a spline arranged at the reduced-rotation output member, and an oscillating member having a first engaging convex portion at a first end in the axis line direction, the first engaging convex portion engaging with the inner teeth, and a second engaging convex portion at a second end in the axis line direction, the second engaging convex portion engaging with the spline.

6. A wheel motor device comprising a variable-rotation output unit for outputting rotational power of a variable-rotation output body accommodated in a variable-rotation output body housing via a variable-rotation output shaft rotating about a reference axis line; and a reduction unit including a reduction gear mechanism for reducing rotation speed of the variable-rotation output shaft and a gear housing for accommodating the reduction gear mechanism, wherein
the reduction gear mechanism includes an input shaft relatively non-rotatable about the reference axis line with respect to the variable-rotation output shaft; an eccentric member having a rotating center eccentric from the reference axis line, the eccentric member being relatively non-rotatable with respect to the input shaft; an outer teeth member supported at the eccentric member in a relatively rotatable manner, the outer teeth member having outer teeth arranged on the outer peripheral surface; an inner teeth member having an inner diameter greater than an outer diameter of the outer teeth member, the inner teeth member having an inner teeth engaging with the outer teeth, the inner teeth having a teeth number different from that of the outer teeth; and a reduced-rotation output member rotated about the reference axis line by the rotation-component around the reference axis line of the outer teeth member;
the inner teeth member is fixed in a non-rotatable manner;
the outer teeth member is formed with a cam hole extending in a direction parallel to the reference axis line;
the reduced-rotation output member includes a carrier pin having an outer diameter smaller than an inner diameter of the cam hole and inserted into the cam hole, a flange portion supporting the carrier pin and rotating about the reference axis line, and an output shaft portion rotating about the reference axis line RL along with the flange portion; and
at least part of the output shaft portion is projected outward of the gear housing.

7. A wheel motor device according to claim 6, wherein
the eccentric member includes first and second eccentric members arranged in parallel to each other along the reference axis line direction and circumferentially displaced to each other by 180 degrees with the reference axis line as the reference;
the outer teeth member includes first and second outer teeth members respectively corresponding to the first and second eccentric members;
the first and second outer teeth members are respectively formed with first and second cam holes extending in a direction parallel to the reference axis line and positioned at substantially the same position in the circumferential direction with the reference axis line as the reference; and
the carrier pin is inserted into both the first and second cam holes facing to each other.

8. A wheel motor device according to claim 6, wherein
the reduction gear mechanism includes a balance weight supported by the input shaft in a relatively non-rotatable manner; and
the balance weight includes a weight portion extending in the direction opposite the eccentric direction of the eccentric member with the reference axis line as the reference.

9. A wheel motor device according to any one of claims 6 to 8, wherein
the variable-rotation output body housing and the gear housing are removably connected to each other;
the gear housing includes a gear housing main body, and a hollow member sandwiched between the variable-rotation output body housing and the gear housing main body, the hollow member acting as the inner teeth member;
the reduction gear unit includes a first bearing member for supporting the reduced-rotation output member; and
the first bearing member includes an inner ring body inserted into a concave portion formed at an outer peripheral surface of the reduced-rotation output member, an outer ring body inserted into a concave portion formed across an inner peripheral surface of the gear housing main body and an inner peripheral surface of the hollow member, and a rolling element arranged between the inner ring body and the outer ring body.

10. A wheel motor device according to any one of claims 6 to 9, wherein
the reduced-rotation output member is formed with a concave portion, which allows the input shaft to be inserted therein, at an inner end-face facing the input shaft; and
the reduction unit includes an input shaft bearing member interposed between an outer peripheral surface of the input shaft and an inner peripheral surface of the concave portion.

11. A wheel motor device according to claim 10, wherein
the gear housing is capable of storing fluid; and
the reduced-rotation output member is formed with a fluid passage having a first end which opens to its outer peripheral surface within the internal space of the gear housing and a second end which opens to the concave portion.

12. A wheel motor device according to claim 11, wherein
the gear housing is formed with a first fluid port for communicating the internal space and the outside; and
the first fluid port is arranged at a position overlapping, when seen from side view, a portion of the reduced-rotation output member where the first end of the fluid passage is positioned with a state in which the wheel motor device is mounted to a vehicle frame at a first position around the reference axis line.

13. A wheel motor device according to claim 12, wherein
the gear housing is formed with a second fluid port positioned below the first fluid port with a state in which the wheel motor device is positioned at the first position.

14. A wheel motor device according to claim 13, wherein
the wheel motor device is capable of being attached to the vehicle frame at a second position displaced from the first position about the reference axis line;
the second fluid port overlaps, when seen from side view, a portion of the reduced-rotation output member where the first end of the fluid passage is positioned, and the first fluid port is positioned below the second fluid port, in a state where the wheel motor device is positioned at the second position; and
the position in the up and down direction of the first fluid port in a state where the wheel motor device is positioned at the first position, and the position in the up and down direction of the second fluid port in a state where the wheel motor device is positioned at the second position are displaced in the up and down direction with the reference axis line as the reference.

15. A wheel motor device according to any one of claims 6 to 14, wherein
the variable-rotation output unit is a hydraulic motor unit that includes a hydraulic motor main body acting as the variable-rotation output body, a motor shaft acting as the variable-rotation output shaft, a motor housing acting as the variable-rotation output body housing, and a swash plate defining a supply/ suction fluid amount of the hydraulic motor main body; and
the swash plate is capable of being mounted within the motor housing at different positions about the reference axis line.

16. A wheel motor device according to any one of claims 6 to 15, further comprising an attachment portion for attaching the wheel motor device to the vehicle frame, the attachment portion being arranged on an end on the side opposite the output side where the output shaft portion is projected.

17. A wheel motor device according to any one of claims 6 to 15, further comprising an attachment portion for attaching the wheel motor device to the vehicle frame, the attachment portion being arranged at an intermediate region between an end on the output side where the output shaft portion is projected and an end opposite the end on the output side.

18. A wheel motor device comprising a hydraulic motor unit for forming an HST in cooperation with a hydraulic pump unit spaced apart from the hydraulic motor unit; and a reduction unit for reducing speed of the output of the hydraulic motor unit, wherein
the hydraulic motor unit includes a hydraulic motor main body fluidly connected to a hydraulic pump main body in the hydraulic pump unit; a motor shaft for supporting the hydraulic motor main body in a relatively non-rotatable manner; and a motor housing for accommodating the hydraulic motor main body and supporting the motor shaft in a freely rotatable manner about an axis line;
the reduction unit includes a reduction gear mechanism for reducing speed of the rotational power from the motor shaft; and a gear housing directly or indirectly connected to the motor housing so as to accommodate the reduction gear mechanism, the gear housing having an inner space capable of storing fluid;
the motor housing is formed with a pair of operation fluid passages having first ends fluidly connected to the hydraulic motor main body and second ends opened to the outer surface to form operation fluid ports;
the gear housing is formed with a fluid port for communicating the inner space to the outside; and
an assembly formed by directly or indirectly connecting the motor housing and the gear housing is mounted to a vehicle frame at different positions around the axis line of the motor shaft.

19. A wheel motor device comprising a hydraulic motor unit for forming an HST in cooperation with a hydraulic pump unit spaced apart from the hydraulic motor unit; and a reduction unit for reducing speed of the output of the hydraulic motor unit, wherein
the hydraulic motor unit includes a hydraulic motor main body fluidly connected to a hydraulic pump main body in the hydraulic pump unit; a motor shaft for supporting the hydraulic motor main body in a relatively non-rotatable manner; and a motor housing for accommodating the hydraulic motor main body and supporting the motor shaft in a freely rotatable manner about an axis line;
the reduction unit includes a reduction gear mechanism for reducing speed of the rotational power from the motor shaft; and a gear housing directly or indirectly connected to the motor housing so as to accommodate the reduction gear mechanism, the gear housing having an inner space capable of storing fluid;
the motor housing is formed with a pair of operation fluid passages having first ends fluidly connected to the hydraulic motor main body and second ends opened to the outer surface to form operation fluid ports;
the gear housing is formed with a fluid port for communicating the inner space to the outside; and
the gear housing is capable of being connected to the motor housing at different positions around the axis line of the motor shaft.

20. A wheel motor device comprising a hydraulic motor unit for forming an HST in cooperation with a hydraulic pump unit spaced apart from the hydraulic motor unit; and a reduction unit for reducing speed of the output of the hydraulic motor unit, wherein
the hydraulic motor unit includes a hydraulic motor main body fluidly connected to a hydraulic pump main body in the hydraulic pump unit; a motor shaft for supporting the hydraulic motor main body in a relatively non-rotatable manner; and a motor housing for accommodating the hydraulic motor main body and supporting the motor shaft in a freely rotatable manner about an axis line;
the reduction unit includes a reduction gear mechanism for reducing speed of the rotational power from the motor shaft; and a gear housing directly or indirectly connected to the motor housing so as to accommodate the reduction gear mechanism, the gear housing having an inner space capable of storing fluid;
the reduction gear mechanism includes an input shaft relatively non-rotatable about its axis line with respect to the motor shaft on the reference axis line; an eccentric member being eccentric from the reference axis line and being relatively non-rotatable with respect to the input shaft; an outer teeth member supported at the eccentric member in a relatively rotatable manner, the outer teeth member having outer teeth arranged on the outer peripheral surface; an inner teeth member fixed in a non-rotatable manner at a position surrounding the outer teeth member, the inner teeth member having an inner teeth engaging with the outer teeth, the inner teeth having a teeth number different from that of the outer teeth; and a reduced-rotation output member rotated about the reference axis line by the rotation-component around the reference axis line of the outer teeth member;
the outer teeth member is formed with a cam hole extending in a direction parallel to the reference axis line;
the reduced-rotation output member includes a carrier pin having an outer diameter smaller than an inner diameter of the cam hole and inserted into the cam hole, a flange portion supporting the carrier pin and rotating about the reference axis line, and an output shaft portion rotating about the reference axis line RL along with the flange portion, at least part of the output shaft portion being projected outward of the gear housing;
the gear housing includes a gear housing main body with an opening at a end-face facing the motor housing, and a hollow member sandwiched between the motor housing and the gear housing main body, the hollow member acting as the inner teeth member;
the motor housing is formed with a pair of operation fluid passages having first ends fluidly connected to the hydraulic motor main body and second ends opened to the outer surface to form operation fluid ports;
the gear housing main body is formed with a fluid port for communicating the inner space to the outside; and
the gear housing main body is capable of being connected to the hollow member at different positions around the reference axis line.

21. A wheel motor device comprising a hydraulic motor unit for forming an HST in cooperation with a hydraulic pump unit spaced apart from the hydraulic motor unit; and a reduction unit for reducing speed of the output of the hydraulic motor unit, wherein
the hydraulic motor unit includes a hydraulic motor main body fluidly connected to a hydraulic pump main body in the hydraulic pump unit; a motor shaft for supporting the hydraulic motor main body in a relatively non-rotatable manner; a motor housing for accommodating the hydraulic motor main body and supporting the motor shaft in a freely rotatable manner about an axis line; and a swash plate defining a supply/suction fluid amount of the hydraulic motor main body, the swash plate being removably connected to the motor housing;
the motor housing includes a motor housing main body with an opening, through which the hydraulic motor main body can pass, at an end-face on a first side in the axis line of the motor shaft, and a port block connected to the motor housing main body so as to close the opening with contacting the hydraulic motor main body;
the port block is formed with a pair of operation fluid passages having first ends fluidly connected to the hydraulic motor main body and second ends opened to the outer surface to form operation fluid ports;
the gear housing is formed with a fluid port for communicating the inner space to the outside; and
the port block and the swash plate are capable of being fixed at different positions around the motor shaft while fixing the relative position of the gear housing and the motor housing main body about the motor shaft.

22. The wheel motor device according to any one of claims 18 to 21 wherein
a plurality of fluid ports are arranged around the output shaft.

23. A wheel motor device comprising a hydraulic motor unit for forming an HST in cooperation with a hydraulic pump unit spaced apart from the hydraulic motor unit; and a reduction unit for reducing speed of the output of the hydraulic motor unit, wherein
the hydraulic motor unit includes a hydraulic motor main body fluidly connected to a hydraulic pump main body in the hydraulic pump unit; a motor shaft for supporting the hydraulic motor main body in a relatively non-rotatable manner; a motor housing for accommodating the hydraulic motor main body and supporting the motor shaft in a freely rotatable manner about an axis line; and a swash plate defining a supply / suction fluid amount of the hydraulic motor main body, the swash plate being removably connected to the motor housing;
the reduction unit includes a reduction gear mechanism for reducing speed of the rotational power from the motor shaft; and a gear housing directly or indirectly connected to the motor housing so as to accommodate the reduction gear mechanism, the gear housing having an inner space capable of storing fluid;
the motor housing is formed with a pair of operation fluid passages having first ends fluidly connected to the hydraulic motor main body and second ends opened to the outer surface to form operation fluid ports; and
the swash plate is capable of being fixed to the motor housing at a first position around the motor shaft and at a second position displaced from the first position by 180 degrees around the motor shaft.
